# EUROPÄISCHE PATENTANMELDUNG

(11) **EP 4 835 410 A1**
(43) Veröffentlichungstag der Anmeldung: **04.11.2026**
(21) Anmeldenummer: 25173655.9
(22) Anmeldetag: 30.04.2025
(51) Int. Cl.: G01D 5/347

(54) **LINEARFÜHRUNGSVORRICHTUNG MIT EINEM OPTISCHEN LINEARMESSSYSTEM**

(71) Anmelder: Schneeberger Holding AG, 4914 Roggwil (CH)
(72) Erfinder: Gasser, Simon, 4600 Olten (CH); Jacob, Yves, 4414 Füllinsdorf (CH)
(74) Vertreter: EGLI-EUROPEAN PATENT ATTORNEYS

(57) **Zusammenfassung**

Die Linearführungsvorrichtung (1) umfasst einen ersten Linearführungskörper (2), einen relativ zum ersten Linearführungskörper (2) linear bewegbaren zweiten Linearführungskörper (3) und ein optisches Linearmesssystem (10). Das optische Linearmesssystem (10) umfasst eine ortsfest bezüglich des ersten Linearführungskörpers (2) angeordnete Massverkörperung (20) mit mehreren Markierungen (M) und eine ortsfest bezüglich des zweiten Linearführungskörpers (3) angeordnete Abtastvorrichtung (30) zum Abtasten der Markierungen (M). Die Abtastvorrichtung (30) umfasst eine Lichtquelle (35) zum Beleuchten eines Bereichs der Massverkörperung (20), einen Lichtsensor (40.1, 40.2) zum Erfassen des an der Massverkörperung (20) reflektierten und/oder gestreuten Lichts und einen Tragkörper (50) für den Lichtsensor. Der Tragkörper (50) hat einen sich zwischen dem Lichtsensor (40.1, 40.2) und der Massverkörperung (20) erstreckenden Durchgangskanal (DK1) für an der Massverkörperung (20) reflektiertes und/oder gestreutes Licht. Ein Antireflexkörper (60) hat einen Abschnitt (60.1), welcher sich durch einen Teilbereich (TB1) des Durchgangskanals (DK1) erstreckt und geeignet ist, einen Teil des an der Massverkörperung (20) reflektierten und/oder gestreuten Lichts (LR2, LR4) zu absorbieren.

## Beschreibung

### Technisches Gebiet

Die Erfindung bezieht sich auf eine Linearführungsvorrichtung mit einem optischen Linearmesssystem.

### Stand der Technik

Linearführungsvorrichtungen an sich sind aus dem Stand der Technik allgemein bekannt und umfassen in der Regel einen ersten Linearführungskörper und einen zweiten Linearführungskörper, wobei der zweite Linearführungskörper relativ zu dem ersten Linearführungskörper linear in einer ersten Richtung bewegbar ist.

Derartige Linearführungsvorrichtungen sind auf verschiedene Weisen realisierbar. In einer typischen Realisierung kann beispielsweise der erste Linearführungskörper als eine sich linear in der ersten Richtung erstreckende Führungsschiene und der zweite Linearführungskörper als ein an der Führungsschiene geführter Führungswagen ausgebildet sein. Alternativ kann auf eine analoge Weise der zweite Linearführungskörper als eine sich linear in der ersten Richtung erstreckende Führungsschiene und der erste Linearführungskörper als ein an der Führungsschiene geführter Führungswagen ausgebildet sein. Um eine lineare Bewegung relativ zueinander zu ermöglichen, kann dabei der Führungswagen über Wälzkörper (z.B. Kugeln oder Rollen) auf die Führungsschiene gestützt sein.

Linearführungsvorrichtungen der vorstehend genannten Art kommen häufig als wesentliche Komponenten von Positioniervorrichtungen zum Einsatz, die dazu bestimmt sind, Gegenstände kontrolliert zu bewegen und insbesondere an vorbestimmte Positionen zu transportieren. Um ein kontrolliertes Positionieren zu ermöglichen, sind Linearführungsvorrichtungen der vorstehend genannten Art deshalb meist mit einem Messsystem ausgestattet, welches zum Erfassen einer Position des zweiten Linearführungskörpers mit Bezug auf den ersten Linearführungskörper geeignet ist.

Für hochpräzise Messungen von Positionen kommen häufig Messsysteme infrage, welche auf optischen Messverfahren zum Erfassen einer Position beruhen. Linearführungsvorrichtungen der vorstehend genannten Art werden deshalb häufig mit einem optischen Linearmesssystem zum Erfassen einer Position des zweiten Linearführungskörpers mit Bezug auf den ersten Linearführungskörper ausgestattet.

Ein optisches Linearmesssystems umfasst in der Regel: eine Massverkörperung, welche ortsfest mit Bezug auf den ersten Linearführungskörper angeordnet ist und eine Mehrzahl in einer Reihe hintereinander angeordneter Markierungen aufweist; und eine Abtastvorrichtung zum optischen Abtasten der Markierungen der Massverkörperung, welche Abtastvorrichtung ortsfest mit Bezug auf den zweiten Linearführungskörper angeordnet ist. Eine entsprechende Abtastvorrichtung umfasst dabei in der Regel: eine Lichtquelle zum Erzeugen von Licht zum Beleuchten zumindest eines mindestens eine der Markierungen umfassenden Bereichs der Massverkörperung, wobei die Massverkörperung ausgebildet ist, von der Lichtquelle erzeugtes, einfallendes Licht zu reflektieren und/oder zu streuen; und einen Lichtsensor zum Erfassen von an dem mindestens einen Bereich der Massverkörperung reflektierten und/oder gestreuten Licht.

Hinsichtlich der Implementierung eines optischen Linearmesssystems in einer Linearführungsvorrichtung der vorstehend genannten Art sind häufig Randbedingungen zu beachten, welche restriktiv sein können insbesondere für die Anordnung der Lichtquelle und des Lichtsensors der Abtastvorrichtung relativ zur Massverkörperung. Aus Platzgründen kann es beispielsweise nicht möglich sein, die Lichtquelle und/oder den Lichtsensor der Abtastvorrichtung in einer beliebig kurzen Distanz zur Massverkörperung anzuordnen. Andererseits kann es aus messtechnischen Gründen erforderlich sein, dass die Lichtquelle und/oder der Lichtsensor der Abtastvorrichtung und/oder die Massverkörperung relativ zueinander vorgegebene Mindestabstände haben sollten, um möglichst optimale Messergebnisse erzielen zu können.

Um den Lichtsensor der Abtastvorrichtung in einer vorgegebenen Distanz zur Massverkörperung zu halten, ist in der Regel ein Tragkörper zum Tragen des Lichtsensors vorgesehen, welcher Tragkörper ortsfest mit Bezug auf den zweiten Linearführungskörper angeordnet ist und an welchem Tragkörper der Lichtsensor zu befestigen ist. Ein derartiger Tragkörper ist häufig derart konzipiert, dass der Tragkörper einen Durchgangskanal aufweist, welcher von einer sich entlang einer Längsachse des Durchgangskanals erstreckenden Seitenfläche begrenzt ist und sich zwischen dem Lichtsensor und der Massverkörperung derart erstreckt, dass an dem mindestens einen Bereich der Massverkörperung reflektiertes und/oder gestreutes Lichts durch den Durchgangskanal zum Lichtsensor gelangen kann und mittels des Lichtsensors detektierbar ist. In diesem Fall ist der Lichtsensor der Abtastvorrichtung von der Massverkörperung zumindest durch einzelne Bereiche des Tragkörpers räumlich getrennt und ein optisches Abtasten der Markierungen der Massverkörperung mittels der Abtastvorrichtung beruht darauf, dass der Lichtsensor an dem mindestens einen Bereich der Massverkörperung reflektiertes und/oder gestreutes Licht detektiert, welches den Durchgangskanal des Tragkörpers passieren muss.

Das von der Lichtquelle erzeugte, auf die Markierungen der Massverkörperung einfallende Licht kann an den Markierungen der Massverkörperung gewöhnlich in verschiedene Richtungen reflektiert und/oder gestreut werden. Des Weiteren kann sich die räumliche Verteilung des an den Markierungen der Massverkörperung reflektierten und/oder gestreuten Lichts mit Bezug auf den Durchgangskanal des Tragkörpers verändern, wenn der erste Linearführungskörper relativ zum zweiten Linearführungskörper bewegt wird. Unter diesen Umständen ist es möglich, dass einerseits Anteile des an den Markierungen der Massverkörperung reflektierten und/oder gestreuten Lichts den Lichtsensor auf einem direkten Weg durch den Durchgangskanal erreichen kann, während andererseits andere Anteile des an den Markierungen der Massverkörperung reflektierten und/oder gestreuten Lichts den Lichtsensor auf einem indirekten Weg durch den Durchgangskanal erreicht, d.h. erst nach einer weiteren Streuung und/oder Reflexion an einer von der Massverkörperung entfernten Oberfläche, beispielsweise an Bereichen des Tragkörpers. Daraus resultiert, dass das vom Lichtsensor detektierte Licht eine räumliche Überlagerung der Anteile des an den Markierungen der Massverkörperung reflektierten und/oder gestreuten Lichts, welches den Lichtsensor auf einem direkten Weg durch den Durchgangskanal erreicht, und jenen Anteilen des an den Markierungen der Massverkörperung reflektierten und/oder gestreuten Lichts, welches den Lichtsensor auf einem indirekten Weg durch den Durchgangskanal erreicht, darstellt.

Eine räumliche Überlagerung der den Lichtsensor auf direktem bzw. indirektem Weg durch den Durchgangskanal erreichenden Anteile des an den Markierungen der Massverkörperung reflektierten und/oder gestreuten Lichts kann eine Auswertung der vom Lichtsensor erzeugten Signale erschweren und die Messgenauigkeit beeinträchtigen, mit welcher mittels der Abtastvorrichtung durch eine Auswertung der Signale des Lichtsensors eine momentane Position der Abtastvorrichtung mit Bezug auf die einzelnen Markierungen der Massverkörperung bestimmt werden kann.

In diesem Zusammenhang zu beachten sind Restriktionen hinsichtlich der Werkstoffe, welche für eine Fertigung des Tragkörpers geeignet sind. Aus der Druckschrift WO 2007/003065 A1 ist beispielsweise eine Linearführungsvorrichtung mit einem optischen Linearmesssystem bekannt, bei welcher der Lichtsensor der Abtastvorrichtung in einen Führungswagen der Linearführungsvorrichtung integriert ist, sodass der Führungswagen selbst bzw. ein Bereich des Führungswagens einen mit einem Durchgangskanal ausgestatteten "Tragkörper" für den Lichtsensor bildet. In diesem Fall ist der "Tragkörper" für den Lichtsensor - wegen der Anforderungen an die mechanische Stabilität des Führungswagens - vorzugsweise aus einem hochfesten Werkstoff wie z.B. Stahl herzustellen. Hierbei ist zu berücksichtigen, dass Oberflächen eines aus Stahl hergestellten Tragkörpers ein relativ grosses Reflexionsvermögen für Licht haben können. Der Möglichkeit, durch Vergrössern des Durchgangskanals zu erreichen, dass am Tragkörper reflektiertes bzw. gestreutes Licht den Lichtsensor nicht erreichen kann, sind in diesem Fall Grenzen gesetzt, zumal ein Vergrössern des Durchgangskanals die mechanische Stabilität des Tragkörpers auf eine unakzeptable Weise beeinträchtigen kann.

### Zusammenfassung der Erfindung

Der vorliegenden Erfindung liegt die Aufgabe zugrunde, die genannten Nachteile zu vermeiden und eine Linearführungsvorrichtung mit einem optischen Linearmesssystem bereitzustellen, welches optische Linearmesssystem eine Abtastvorrichtung mit einem einen Durchgangskanal aufweisenden Tragkörper für einen Lichtsensor umfasst und eine Implementierung des Lichtsensors am Tragkörper ermöglicht, welche einfach und kostengünstig realisierbar ist und eine höhere Messgenauigkeit der Abtastvorrichtung gewährleistet.

Diese Aufgabe wird gelöst durch eine Linearführungsvorrichtung mit den Merkmalen des Anspruchs 1.

Diese Linearführungsvorrichtung umfasst einen ersten Linearführungskörper und einen zweiten Linearführungskörper, welcher zweite Linearführungskörper relativ zu dem ersten Linearführungskörper linear in einer ersten Richtung bewegbar ist; und ein optisches Linearmesssystem zum Erfassen einer Position des zweiten Linearführungskörpers mit Bezug auf den ersten Linearführungskörper.

Hierbei umfasst das optische Linearmesssystem: eine Massverkörperung, welche ortsfest mit Bezug auf den ersten Linearführungskörper angeordnet ist und eine Mehrzahl in einer Reihe hintereinander angeordneter Markierungen aufweist; und eine Abtastvorrichtung zum optischen Abtasten der Markierungen der Massverkörperung, welche Abtastvorrichtung ortsfest mit Bezug auf den zweiten Linearführungskörper angeordnet ist.

Die Abtastvorrichtung umfasst: eine Lichtquelle zum Erzeugen von Licht zum Beleuchten zumindest eines mindestens eine der Markierungen umfassenden Bereichs der Massverkörperung, wobei die Massverkörperung ausgebildet ist, von der Lichtquelle erzeugtes, einfallendes Licht zu reflektieren und/oder zu streuen; einen Lichtsensor zum Erfassen von an dem mindestens einen Bereich der Massverkörperung reflektierten und/oder gestreuten Licht; und einen ortsfest mit Bezug auf den zweiten Linearführungskörper angerordneten Tragkörper für den Lichtsensor, welcher Tragkörper einen Durchgangskanal aufweist, welcher von einer sich entlang einer Längsachse des Durchgangskanals erstreckenden Seitenfläche begrenzt ist und sich zwischen dem Lichtsensor und der Massverkörperung derart erstreckt, dass an dem mindestens einen Bereich der Massverkörperung reflektiertes und/oder gestreutes Lichts durch den Durchgangskanal zum Lichtsensor gelangen kann und mittels des Lichtsensors detektierbar ist.

Gemäss der Erfindung ist am Tragkörper ein Antireflexkörper angeordnet, wobei der Antireflexkörper einen ersten Abschnitt aufweist, welcher aus einem Material besteht, welches geeignet ist, mittels der Lichtquelle erzeugbares Licht zu absorbieren, und ausserdem gewährleistet, dass der erste Abschnitt für das an dem mindestens einen Bereich der Massverkörperung reflektierte und/oder gestreute Licht ein geringeres Reflexionsvermögen als die Seitenwand des Durchgangskanals aufweist. Der erste Abschnitt des Antireflexkörpers erstreckt sich durch einen ersten Teilbereich des Durchgangskanals des Tragkörpers entlang der Seitenfläche des Durchgangskanals des Tragkörpers derart, dass neben dem ersten Abschnitt des Antireflexkörpers ein zweiter Teilbereich des Durchgangskanals des Tragkörpers vorhanden ist, sodass zumindest ein Teil des an dem mindestens einen Bereich reflektierten und/oder gestreuten Lichts den zweiten Teilbereich des Durchgangskanals des Tragkörpers direkt ohne eine Reflexion an der Seitenwand des Durchgangskanals des Tragkörpers und unbeeinflusst vom Antireflexkörper zum Lichtsensor passieren kann und mittels des Lichtsensors detektierbar ist, wobei ein anderer Teil des an dem mindestens einen Bereich der Massverkörperung reflektierten und/oder gestreuten Lichts, welcher in Richtung der Seitenwand des Durchgangskanals des Tragkörpers reflektiert und/oder gestreut ist, vom Antireflexkörper absorbierbar ist und dadurch daran gehindert ist, an der Seitenwand des Durchgangskanals des Tragkörpers reflektiert zu werden und/oder nach einer Reflexion an der Seitenwand des Durchgangskanals des Tragkörpers zum Lichtsensor zu gelangen und mittels des Lichtsensors detektierbar zu sein.

Der Antireflexkörper ist geeignet, mit dem optischen Linearmesssystem derart zu kooperieren, dass aufgrund der Anordnung des ersten Abschnitts des Antireflexkörpers im Durchgangskanal des Tragkörpers die Genauigkeit erhöht werden kann, mit welcher auf der Grundlage einer Auswertung von Signalen des Lichtsensors eine Position der Abtastvorrichtung mit Bezug auf die Markierungen der Massverkörperungen bestimmt werden kann (im Vergleich zu einer Realisierung des Tragkörpers ohne eine Anordnung des Antireflexkörpers).

Dies wird insbesondere dadurch erreicht, dass sich der erste Abschnitt des Antireflexkörpers lediglich durch einen ersten Teilbereich des Durchgangskanals des Tragkörpers derart erstreckt, dass zumindest ein Teil des an dem mindestens einen Bereich der Massverkörperung reflektierten und/oder gestreuten Lichts den Lichtsensor auf einem "direkten" Weg (durch einen vom "ersten Teilbereich" des Durchgangskanal verschiedenen "zweiten Teilbereich des Durchgangskanals" des Tragkörpers) erreichen kann, d.h. ohne eine Reflexion an der Seitenwand des Durchgangskanals des Tragkörpers und unbeeinflusst vom Antireflexkörper, und somit zu einem Signal des Lichtsensors beitragen kann, welches eine Information hinsichtlich einer Position der Abtastvorrichtung mit Bezug auf die Markierungen der Mass-verkörperungen liefert.

Dadurch, dass der erste Abschnitt des Antireflexkörpers aus einem Material besteht, welches geeignet ist, mittels der Lichtquelle erzeugbares Licht zu absorbieren, und welches ausserdem gewährleistet, dass der erste Abschnitt für das an dem mindestens einen Bereich der Massverkörperung reflektierte und/oder gestreute Licht ein geringeres Reflexionsvermögen als die Seitenwand des Durchgangskanals aufweist, wird erreicht, dass ein anderer Teil des an dem mindestens einen Bereich der Massverkörperung reflektierten und/oder gestreuten Lichts, welcher in Richtung der Seitenwand des Durchgangskanals des Tragkörpers reflektiert und/oder gestreut ist, im ersten Abschnitt des Antireflexkörpers absorbiert wird und somit mittels des Lichtsensors nicht detektierbar ist. Auf diese Weise wird durch eine geeignete Anordnung des ersten Abschnitts des Antireflexkörpers im Durchgangskanal zumindest ein Teil des an dem mindestens einen Bereich der Massverkörperung reflektierten und/oder gestreuten Lichts daran gehindert, den Lichtsensor auf einem "indirekten" Weg (d.h. nach einer Reflexion an der Seitenwand des Durchgangskanals des Tragkörpers oder an einer Oberfläche des Antireflexkörpers) zu erreichen. Durch eine geeignete Implementierung des Antireflexkörpers kann deshalb erreicht werden, dass der Lichtsensor ausschliesslich Licht detektiert, welches den Lichtsensor erreicht, ohne an dem Tragkörper reflektiert oder gestreut worden zu sein. Die Präsenz des Antireflexkörpers resultiert folglich in einer höheren Messgenauigkeit der Abtastvorrichtung.

Der Antireflexkörper ist ein separater Körper, welcher aus einem anderen Material als der Tragkörper bzw. der erste Linearführungskörper bzw. der zweite Linearführungskörper bestehen kann und deshalb unabhängig vom Tragkörper bzw. dem ersten Linearführungskörper bzw. dem zweiten Linearführungskörper kostengünstig herstellbar ist. Des Weiteren kann der Antireflexkörper einfach und schnell am Tragkörper angeordnet werden und ermöglicht deshalb eine Implementierung an einem Tragkörper, welche schnell und kostengünstig im Rahmen von automatisierten Produktionsprozessen durchführbar ist. Insbesondere setzt eine Implementierung des Antireflexkörpers keine spezielle Bearbeitung des Tragkörpers voraus. Dies ermöglicht eine kostengünstige Implementierung des Antireflexkörpers in Kombination mit einer Implementierung des optischen Linearmesssystems.

Eine Ausführungsform der Linearführungsvorrichtung ist beispielsweise derart realisierbar, dass der erste Linearführungskörper als eine sich linear in der ersten Richtung erstreckende Führungsschiene und der zweite Linearführungskörper als ein an der Führungsschiene geführter Führungswagen ausgebildet ist. Alternativ kann der zweite Linearführungskörper als eine sich linear in der ersten Richtung erstreckende Führungsschiene und der erste Linearführungskörper als ein an der Führungsschiene geführter Führungswagen ausgebildet sein.

Eine Ausführungsform der Linearführungsvorrichtung kann derart konzipiert sein, dass der Tragkörper ein integraler Bestandteil des zweiten Linearführungskörpers ist. Demensprechend kann der "Tragkörper" beispielsweise ein Abschnitt eines beispielsweise aus Stahl gefertigten Führungswagens der Linearführungsvorrichtung sein, wobei vorgesehen ist, den Lichtsensor der Abtastvorrichtung am Führungswagen selbst zu befestigen.

Eine Ausführungsform der Linearführungsvorrichtung ist derart konzipiert, dass der Antireflexkörper im ersten Abschnitt des Antireflexkörpers einen Durchgangskanal aufweist, welcher sich entlang der Längsachse des Durchgangskanals des Tragkörpers durch den zweiten Teilbereich des Durchgangskanals des Tragkörpers erstreckt. In diesem Fall kann der Antireflexkörper derart ausgebildet sein, dass ein Teil des an dem mindestens einen Bereich der Massverkörperung reflektierten und/oder gestreuten Lichts den im erstem Abschnitt des Antireflexkörpers ausgebildeten Durchgangskanal passieren und dabei den Lichtsensor auf einem "direkten" Weg (ohne eine Reflexion an der Seitenwand des Durchgangskanals und unbeeinflusst vom Antireflexkörper selbst) erreichen kann. Der erste Abschnitt des Antireflexkörpers ist dabei derart geformt, dass der im ersten Abschnitt des Antireflexkörpers ausgebildete Durchgangskanal seitlich von einer sich ringförmig um die Längsachse des Durchgangskanals erstreckenden Wandabschnitt begrenzt ist. Dieser sich ringförmig erstreckende Wandabschnitt erstreckt sich im Durchgangskanal des Tragkörpers entlang der Seitenwand des Durchgangskanals des Tragkörpers und ist somit geeignet, entlang seines gesamten Umfangs zu verhindern, dass an dem mindestens einen Bereich der Massverkörperung reflektiertes und/oder gestreutes Lichts an der Seitenwand des Durchgangskanal des Tragkörpers in Richtung des Lichtsensors reflektiert werden könnte.

Eine Ausführungsform der Linearführungsvorrichtung ist derart konzipiert, dass der Tragkörper eine erste Oberfläche und eine der ersten Oberfläche gegenüberliegende zweite Oberfläche aufweist, welche zweite Oberfläche mit Bezug auf die Massverkörperung einen geringeren Abstand aufweist als die erste Oberfläche, wobei an der ersten Oberfläche eine sich radial zur Längsachse des Durchgangskanals des Tragkörpers erstreckende erste Auflagefläche ausgebildet ist, welche erste Auflagefläche dazu dient, die Abtastvorrichtung oder den Antireflexkörper zu stützen. Die Ausbildung der ersten Auflagefläche an der ersten Oberfläche des Tragkörpers ermöglicht eine einfach ausführbare Montage der Abtastvorrichtung und/oder des Antireflexkörpers am Tragkörper, zumal die erste Oberfläche des Tragkörpers in einem von der Massverkörperung entfernten Bereich des Tragkörpers angeordnet ist und deshalb für eine Montage der Abtastvorrichtung und/oder des Antireflexkörpers einfach zugänglich sein kann.

Eine Weiterbildung der vorstehend genannten Ausführungsform der Linearführungsvorrichtung ist derart konzipiert, dass der Tragkörper an der ersten Oberfläche eine erste Ausnehmung aufweist, welche sich longitudinal zur Längsachse des Durchgangskanals des Tragkörpers erstreckt, wobei die erste Auflagefläche in der ersten Ausnehmung ausgebildet ist, sodass die erste Ausnehmung durch die erste Auflagefläche begrenzt ist. Die Ausbildung der ersten Auflagefläche in der ersten Ausnehmung ermöglicht eine einfache Montage der Abtastvorrichtung und/oder des Antireflexkörpers. Zur Vereinfachung der Montage kann insbesondere die Form der Ausnehmung an die Form der zu montierenden Abtastvorrichtung und/oder des zu montierenden Antireflexkörpers angepasst sein.

Zusätzlich kann (optional) vorgesehen sein, dass der Tragkörper an der ersten Oberfläche eine zweite Ausnehmung aufweist, welche neben der ersten Auflagefläche derart ausgebildet ist, dass sich die zweite Ausnehmung longitudinal zur Längsachse des Durchgangskanals des Tragkörpers erstreckt und in einem Bereich der zweiten Ausnehmung durch eine zweite Auflagefläche begrenzt ist, welche sich radial zur Längsachse des Durchgangskanals des Tragkörpers erstreckt. Die erste Auflagefläche und die zweite Auflagefläche stellen zwei separate Auflageflächen dar, auf denen die Abtastvorrichtung und der Antireflexkörper separat voneinander implementiert werden können.

Zusätzlich kann (optional) vorgesehen sein, dass der Antireflexkörper mindestens einen zweiten Abschnitt aufweist, welcher als eine sich radial zur Längsachse des Durchgangskanals des Tragkörpers erstreckende Schulter ausgebildet ist, und wobei der Antireflexkörpers derart am Tragkörper platziert oder platzierbar ist, dass der erste Abschnitt des Antireflexkörpers im ersten Teilbereich des Durchgangskanals des Tragkörpers angeordnet ist und der mindestens eine zweite Abschnitt des Antireflexkörpers mit der zweiten Auflagefläche des Tragkörpers in Kontakt gebracht ist.

Die Ausbildung des zweiten Abschnitts des Antireflexkörpers als eine sich radial zur Längsachse des Durchgangskanals des Tragkörpers erstreckende Schulter ermöglicht zusammen mit der Ausbildung der zweiten Auflagefläche des Tragkörpers eine einfache Montage der Antireflexkörpers. Zur Montage des Antireflexkörpers muss lediglich der erste Abschnitt der Antireflexkörpers in den Durchgangskanal des Tragkörpers eingeführt werden und der zweite Abschnitt des Antireflexkörpers (d.h. die Schulter) mit der zweiten Auflagefläche des Tragkörpers in Kontakt gebracht werden. Auf diese Weise bildet die zweite Auflagefläche des Tragkörpers einen stabilen Sitz für den Antireflexkörper am Tragkörper.

Hinsichtlich der Anordnung der Abtastvorrichtung kann die Linearführungsvorrichtung derart konzipiert sein, dass die Abtastvorrichtung derart am Tragkörper platziert oder platzierbar ist, dass die Abtastvorrichtung mit der ersten Auflagefläche des Tragkörpers in Kontakt gebracht ist.

Eine Ausführungsform der Linearführungsvorrichtung ist derart konzipiert, dass der Antireflexkörper an der Abtastvorrichtung befestigt ist, wobei die Abtastvorrichtung derart am Tragkörper platziert oder platzierbar ist, dass die Abtastvorrichtung mit der ersten Auflagefläche des Tragkörpers in Kontakt gebracht ist und der erste Abschnitt des Antireflexkörpers im ersten Teilbereich des Durchgangskanals des Tragkörpers angeordnet ist. Wenn der Antireflexkörper an der Abtastvorrichtung befestigt ist, bilden die Abtastvorrichtung und der Antireflexkörper eine Einheit, welche als Ganzes am Tragkörper implementiert werden kann, indem die Abtastvorrichtung mit der ersten Auflagefläche des Tragkörpers in Kontakt gebracht wird. In diesem Fall bildet die erste Auflagefläche des Tragkörpers einen stabilen Sitz für die Abtastvorrichtung und den Antireflexkörper am Tragkörper.

Eine Ausführungsform der Linearführungsvorrichtung ist derart konzipiert, dass der Antireflexkörper mindestens einen zweiten Abschnitt aufweist, welcher als eine sich radial zur Längsachse des Durchgangskanals des Tragkörpers erstreckende Schulter ausgebildet ist, und wobei der Antireflexkörpers derart am Tragkörper platziert oder platzierbar ist, dass der zweite Abschnitt des Antireflexkörpers mit der ersten Auflagefläche des Tragkörpers in Kontakt gebracht ist und der erste Abschnitt des Antireflexkörpers im ersten Teilbereich des Durchgangskanals des Tragkörpers angeordnet ist. Zusätzlich kann vorgesehen sein, dass am zweiten Abschnitt des Antireflexkörpers in einem von der ersten Auflagefläche des Tragkörpers entfernten Bereich des zweiten Abschnitts des Antireflexkörpers eine sich radial zur Längsachse des Durchgangskanals des Tragkörpers erstreckende dritte Auflagefläche für die Abtastvorrichtung ausgebildet ist, wobei die Abtastvorrichtung derart an dem Antireflexkörper platziert oder platzierbar ist, dass die Abtastvorrichtung in Kontakt mit der dritten Auflagefläche ist und mittels der dritten Auflagefläche in einer vorgegeben Position mit Bezug auf den Antireflexkörper gehalten oder haltbar ist.

Wenn die Abtastvorrichtung an der am zweiten Abschnitt des Antireflexkörpers ausgebildeten dritten Auflagefläche platziert ist, bilden der Antireflexkörper und die Abtastvorrichtung eine Einheit, welche als Ganzes am Tragkörper implementiert werden kann, indem der Antireflexkörper mit der ersten Auflagefläche des Tragkörpers in Kontakt gebracht wird. In diesem Fall bildet die erste Auflagefläche des Tragkörpers einen stabilen Sitz für den Antireflexkörper und die Abtastvorrichtung am Tragkörper.

Die vorstehend genannten Ausführungsformen der Linearführungsvorrichtung können derart konzipiert sein, dass der Antireflexkörper aus einem Kunststoffmaterial gefertigt ist. Der Antireflexkörper kann deshalb kostengünstig mit konventionellen Herstellungsverfahren (z.B. Spritzgiessen) aus einem bekannten Kunststoffmaterial gefertigt werden, welches zumindest gewährleistet, dass der Antireflexkörper am Tragkörper implementierbar ist und eine hierfür ausreichende mechanische Stabilität aufweist.

In dem zum Herstellen des Antireflexkörpers dienenden Kunststoffmaterial kann ein Farbstoff verteilt sein, welcher Farbstoff geeignet ist, mittels der Lichtquelle erzeugbares Licht zu absorbieren. Der im Kunststoffmaterial verteilte Farbstoff verstärkt die Absorption des mittels der Lichtquelle erzeugbaren Lichts im Antireflexkörper. Durch eine geeignete Wahl des Kunststoffmaterials und ggf. durch eine geeignete Wahl eines im Kunststoffmaterial verteilten Farbstoffs kann vorzugsweise erreicht werden, dass das an der Massverkörperung reflektierte und/oder gestreute Licht den Antireflexkörper nicht durchdringen kann, wobei das in den Antireflexkörper eindringende Licht im Antireflexkörper vollständig absorbiert wird. Das in den Antireflexkörper eindringende Licht kann in diesem Fall folglich nicht mehr zu einer Oberfläche des Tragkörpers vordringen und dementsprechend auch nicht an der Oberfläche des Tragkörpers reflektiert werden.

Der Antireflexkörper kann (optional) derart ausgebildet sein, dass der Antireflexkörper eine Oberfläche aufweist, welche zumindest in einem Bereich, welcher für das an dem mindestens einen Bereich der Massverkörperung reflektierte und/oder gestreute Licht zugänglich ist, eine Rauheit mit einem Mittenrauwert Ra im Bereich 0.8 µm < Ra < 4.5 µm aufweist. Eine derartige Rauheit der Oberfläche des Antireflexkörpers ist geeignet, das Reflexionsvermögen der Oberfläche des Antireflexkörpers für das an dem mindestens einen Bereich der Massverkörperung reflektierte und/oder gestreute Licht zu reduzieren.

Die vorstehend genannten Massnahmen tragen dazu bei, den Teil des an dem mindestens einen Bereich der Massverkörperung reflektierten und/oder gestreuten Lichts, welcher den Lichtsensor auf einem "indirekten" Weg (nach einer Reflexion und/oder Streuung an einer Oberfläche des Antireflexkörpers) erreichen könnte, signifikant zu reduzieren bzw. zu minimieren oder zu eliminieren.

Eine Ausführungsform der Linearführungsvorrichtung ist derart konzipiert, dass die Form des ersten Abschnitts des Antireflexkörpers an die Form des Durchgangskanals des Tragkörpers angepasst ist, sodass der erste Abschnitt des Antireflexkörpers in den Durchgangskanal des Tragkörpers einführbar und zwischen verschiedenen Bereichen der Seitenfläche des Durchgangskanals des Tragkörpers einklemmbar ist, um den Antireflexkörper in einer vorgegeben Position mit Bezug auf den Tragkörper halten zu können. Diese Ausbildung des Antireflexkörpers ermöglicht eine besondere einfache und effiziente Implementierung des Antireflexkörpers am Tragkörper.

### Kurze Beschreibung der Zeichnungen

Weitere Einzelheiten der Erfindung und insbesondere beispielhafte Ausführungsformen der erfindungsgemässen Linearführungsvorrichtung werden im Folgenden anhand der beigefügten Zeichnungen erläutert. Es zeigen:
- Fig. 1: eine perspektivische Ansicht einer erfindungsgemässen Linearführungsvorrichtung, mit einem ersten Linearführungskörper, einem zweiten Linearführungskörper und einem optischen Linearmesssystem, wobei der erste Linearführungskörper als eine sich linear in einer ersten Richtung (X) erstreckende Führungsschiene und der zweite Linearführungskörper als ein an der Führungsschiene geführter Führungswagen ausgebildet ist und wobei das optische Linearmesssystem eine an der Führungsschiene angeordnete Massverkörperung und eine an dem Führungswagen angeordnete Abtastvorrichtung umfasst;
- Fig. 2: eine Anordnung von Markierungen in einem Abschnitt der Massverkörperung der Linearführungsvorrichtung gemäss Fig. 1, vergrössert dargestellt in einer Draufsicht auf eine Oberfläche der Führungsschiene gemäss Fig. 1;
- Fig. 3: die Linearführungsvorrichtung gemäss Fig. 1 in einem Querschnitt senkrecht zur ersten Richtung (X), in einer Darstellung ohne einen erfindungsgemäss ausgebildeten Antireflexkörper;
- Fig. 4A: eine erste Ausführungsform eines Antireflexkörpers gemäss der Erfindung in einer perspektivischen Darstellung;
- Fig. 4B: den Antireflexkörper gemäss Fig. 4A, in einer Ansicht aus einer anderen Perspektive;
- Fig. 5A: eine perspektivische Ansicht des Führungswagens der Linearführungsvorrichtung gemäss Fig. 1, mit einem Antireflexkörper gemäss Fig. 4A bzw. 4B, ohne Darstellung der Abtastvorrichtung des optischen Linearmesssystems, sodass der Antireflexkörper sichtbar erscheint;
- Fig. 5B: eine perspektivische Ansicht des Führungswagens der Linearführungsvorrichtung gemäss Fig. 1, wie in Fig. 5A, jedoch aus einer anderen Perspektive betrachtet;
- Fig. 6A: die Linearführungsvorrichtung gemäss Fig. 1 mit einem Antireflexkörper gemäss Fig. 4A bzw. 4B, in einem Querschnitt senkrecht zur Längsachse der Führungsschiene durch den Führungswagen und die Führungsschiene;
- Fig. 6B: die Linearführungsvorrichtung gemäss Fig. 1 mit einem Antireflexkörper gemäss Fig. 4A bzw. 4B, in einem Längsschnitt entlang der Längsachse der Führungsschiene durch den Führungswagen und die Führungsschiene;
- Fig. 7: die Linearführungsvorrichtung gemäss Fig. 1 mit ei- ner zweiten Ausführungsform eines Antireflexkörpers, in einem Längsschnitt entlang der Längsachse der Führungsschiene durch den Führungswagen und die Führungsschiene;
- Fig. 8: die Linearführungsvorrichtung gemäss Fig. 1 mit einer dritten Ausführungsform eines Antireflexkörpers, in einem Längsschnitt entlang der Längsachse der Führungsschiene durch den Führungswagen und die Führungsschiene

### Beschreibung von Ausführungsformen

Für dieselben Elemente in den Figuren sind jeweils dieselben Bezugszeichen verwendet, wenn nichts anderes erwähnt ist.

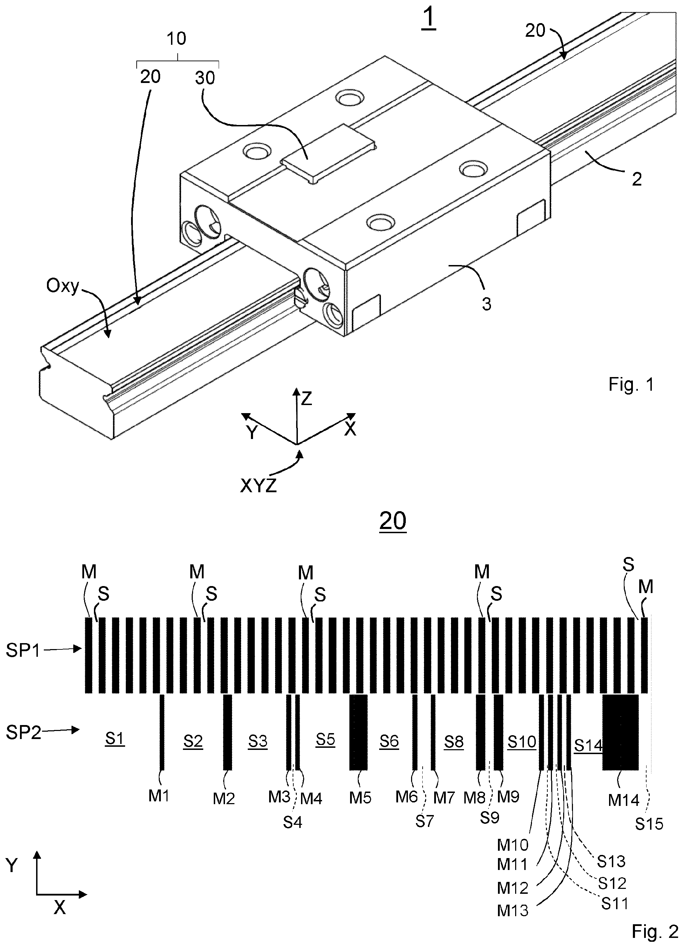

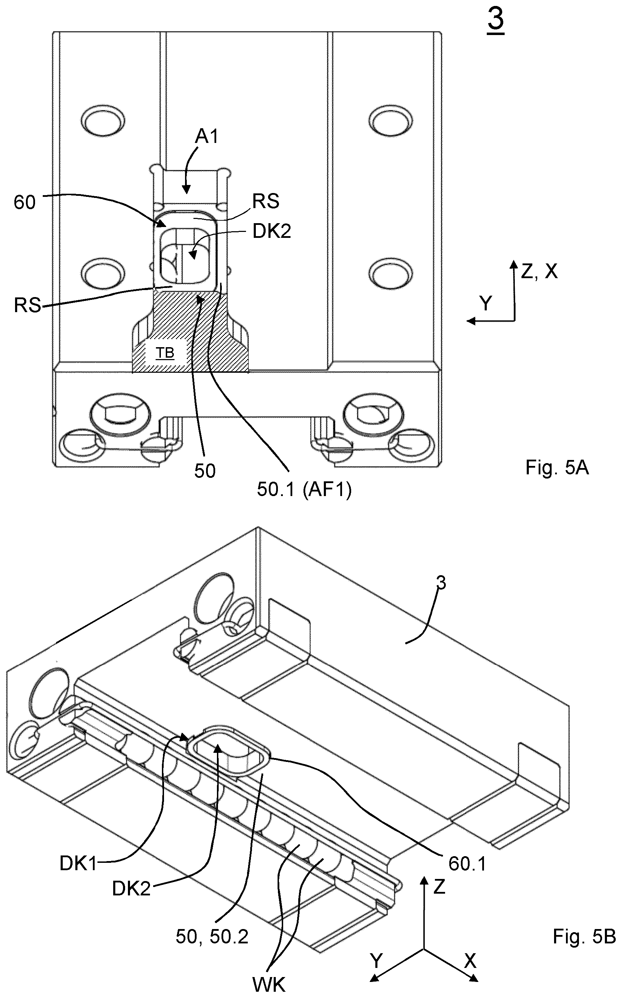

Fig. 1 zeigt in einer perspektivischen Ansicht eine erfindungsgemässe Linearführungsvorrichtung 1, welche einen ersten Linearführungskörper 2 und einen zweiten Linearführungskörper 3 umfasst, wobei der zweite Linearführungskörper 3 relativ zu dem ersten Linearführungskörper 2 linear in einer Richtung bewegbar ist. Im vorliegenden Beispiel ist angenommen, dass die Linearführungsvorrichtung 1 als eine lineare Profilschienenführung ausgebildet ist, welche eine sich linear in einer ersten Richtung erstreckende Führungsschiene und einen an der Führungsschiene geführten Führungswagen aufweist. Dabei ist insbesondere angenommen, dass der erste Linearführungskörper 2 der Linearführungsvorrichtung 1 die lineare Führungsschiene der linearen Profilschienenführung bildet und demensprechend eine Längsachse aufweist, welche sich linear in der ersten Richtung erstreckt. Entsprechend ist angenommen, dass der zweite Linearführungskörper 3 der Linearführungsvorrichtung 1 den Führungswagen der linearen Profilschienenführung bildet, welcher an der in Fig. 1 dargestellten Führungsschiene derart gestützt bzw. geführt ist, dass der zweite Linearführungskörper 3 linear in der ersten Richtung bewegbar ist. Der zweite Linearführungskörper 3 (Führungswagen) kann zu diesem Zweck beispielsweise über in der Fig. 1 nicht sichtbare, jedoch in Fig. 5B dargestellte Wälzkörper WK auf den ersten Linearführungskörper 2 (Führungsschiene) gestützt sein.

In der Darstellung gemäss Fig. 1 ist angenommen, dass sich die X-Achse eines in Fig. 1 dargestellten kartesischen Koordinatensystems XYZ mit drei orthogonalen Achsen X, Y bzw. Z (X-Achse, Y-Achse bzw. Z-Achse) in der vorstehend genannten "ersten" Richtung (entsprechend der Längsachse der Führungsschiene) erstreckt und der zweite Linearführungskörper 3 somit linear in Richtung der X-Achse bewegbar ist. Demensprechend wird die vorstehend genannte "erste Richtung" im Folgenden auch als "X-Richtung" bezeichnet.

Wie in Fig. 1 angedeutet, weist die Linearführungsvorrichtung 1 ein optisches Linearmesssystem 10 zum Erfassen einer Position des zweiten Linearführungskörpers 3 mit Bezug auf den ersten Linearführungskörper 2 auf. Dieses optische Linearmesssystem 10 umfasst eine Massverkörperung 20, welche ortsfest mit Bezug auf den ersten Linearführungskörper 2 angeordnet ist und eine Mehrzahl in einer Reihe hintereinander angeordneter (in Fig. 1 nicht dargestellten) Markierungen aufweist, und eine Abtastvorrichtung 30 zum optischen Abtasten der Markierungen der Massverkörperung 20, welche Abtastvorrichtung 30 ortsfest mit Bezug auf den zweiten Linearführungskörper 3 angeordnet ist.

Im vorliegenden Beispiel ist die Massverkörperung 20 an einem ebenen Oberflächenbereich Oxy des ersten Linearführungskörpers 2 angeordnet, welcher sich parallel zur X-Achse und parallel zur Y-Achse des in Fig. 1 dargestellten kartesischen Koordinatensystems XYZ erstreckt. Die Massverkörperung 20 umfasst eine Mehrzahl von Markierungen, welche in einer oder mehreren sich in der X-Richtung erstreckenden Reihen hintereinander angeordnet sind.

Dementsprechend ist die Abtastvorrichtung 30 am zweiten Linearführungskörper 3 befestigt, sodass bei einer Bewegung des zweiten Linearführungskörpers 3 in der X-Richtung die Abtastvorrichtung 30 ebenfalls in der X-Richtung bewegt wird und bei einer Bewegung des zweiten Linearführungskörpers 3 in der X-Richtung die einzelnen Markierungen der Massverkörperung 20 mittels der Abtastvorrichtung 30 nacheinander detektiert werden können.

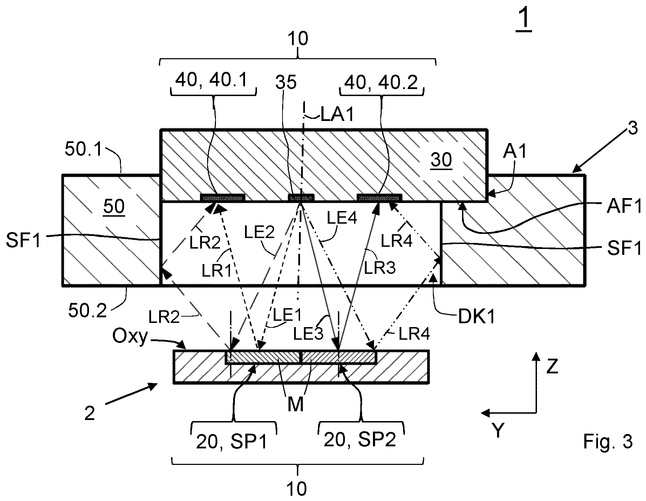

Weitere Einzelheiten des optischen Linearmesssystems 10 und insbesondere der Massverkörperung 20 und der Abtastvorrichtung 30 werden im Folgenden mit Bezug auf Fig. 2 und 3 erläutert.

Im vorliegenden Beispiel ist angenommen, dass die einzelnen Markierungen der Massverkörperung 20 in dem Oberflächenbereich Oxy des ersten Linearführungskörpers 2 mittels einer Bearbeitung des Oberflächenbereichs Oxy in verschiedenen Bereichen (im Folgenden "Markierungsbereichen") realisiert wurden, welche den jeweiligen Markierungen entsprechen. Insbesondere ist angenommen, dass der Oberflächenbereich Oxy - vor einer Bearbeitung zum Zwecke einer Realisierung der Markierungen - ein vorgegebenes Reflexionsvermögen für Licht aufweist und dass eine Bearbeitung der Oberfläche des ersten Linearführungskörpers 2 in den einzelnen Markierungsbereichen den Effekt hat, dass das Reflexionsvermögen in den bearbeiteten Bereichen des Oberflächenbereichs Oxy (d.h. in den einzelnen Markierungsbereichen) reduziert ist im Vergleich zum Reflexionsvermögen in den unbearbeiteten Bereichen des Oberflächenbereichs Oxy. Dementsprechend unterscheiden sich die Markierungen der Massverkörperung 20 von den unbearbeiteten Bereichen der Massverkörperung 20 dadurch, dass auf die Massverkörperung 20 einfallendes Licht in den einzelnen Markierungsbereichen mit einer geringeren Intensität reflektiert und/oder gestreut wird als in den unbearbeiteten Bereichen des Oberflächenbereichs Oxy.

Verfahren zur Realisierung der vorstehend genannten Markierungen der Massverkörperung 20 sind an sich bekannt. Beispielsweise kann die Oberfläche des ersten Linearführungskörpers 2 in den jeweiligen Markierungsbereichen mit einem gepulsten Laserstrahl bearbeitet werden (wie beispielsweise in der Druckschrift EP 4350303 A1 beschrieben).

Da die unbearbeiteten Bereiche des Oberflächenbereichs Oxy ein grösseres Reflexionsvermögen für Licht aufweisen als die einzelnen Markierungsbereiche, werden unbearbeitete Bereiche des Oberflächenbereichs Oxy im Folgenden als "Spiegelbereiche" bezeichnet.

Die Massverkörperung 20 umfasst im vorliegenden Beispiel mindestens eine sich der X-Richtung erstreckende Spur mit mehreren hintereinander alternierend angeordneten Spiegelbereichen und Markierungsbereichen.

Wie in Fig. 2 angedeutet, umfasst die Massverkörperung 20 beispielsweise zwei verschiedene, in dem Oberflächenbereich Oxy des ersten Linearführungskörpers 2 angeordnete und sich parallel zueinander in der X-Richtung erstreckende Spuren mit mehreren hintereinander alternierend angeordneten Spiegelbereichen und Markierungsbereichen: eine erste Spur SP1, welche als Inkrementalspur mit einer Mehrzahl von äquidistant angeordneten Markierungsbereichen ausgebildet ist, und eine zweite Spur SP2, welche als Referenzspur ausgebildet ist und mindestens einen Markierungsbereich zur Codierung mindestens einer Referenzposition aufweist oder alternativ auch mehrere in der X-Richtung hintereinander angeordnete Markierungsbereiche zur Codierung mehrerer verschiedener Referenzpositionen aufweisen kann.

Wie in Fig. 2 angedeutet, erstreckt sich jeder der Markierungsbereiche der ersten Spur SP1 und der zweiten Spur SP2 der Massverkörperung 20 in dem Oberflächenbereich Oxy des ersten Linearführungskörpers 2 jeweils linienartig in Richtung der in den Fig. 1 und 2 dargestellten Y-Achse, d.h. quer zur Längsrichtung der Massverkörperung 20.

Wie in Fig. 2 angedeutet, umfasst die erste Spur SP1 (Inkrementalspur) eine Mehrzahl von Markierungsbereichen M, welche hinsichtlich ihrer geometrischen Form und hinsichtlich ihrer räumlichen Erstreckung in Richtung der X-Achse und hinsichtlich ihrer räumlichen Erstreckung in Richtung der Y-Achse identisch sind. Zwischen zwei benachbarten, in Richtung der X-Achse unmittelbar hintereinander angeordneten Markierungsbereichen M ist jeweils ein Spiegelbereich S ausbildet, wobei alle Spiegelbereiche S der ersten Spur SP1 hinsichtlich ihrer räumlichen Erstreckung in Richtung der X-Achse und hinsichtlich ihrer räumlichen Erstreckung in Richtung der Y-Achse identisch sind.

Wie in Fig. 2 weiterhin angedeutet, umfasst die zweite Spur SP2 (Referenzspur) im vorliegenden Beispiel mehrere (hier beispielsweise insgesamt vierzehn) in der X-Richtung in einer Reihe hintereinander angeordnete Markierungsbereiche M1, M2, M3, M4, M5, M6, M7, M8, M9, M10, M11, M12, M13 bzw. M14.

Auch im Falle der zweiten Spur SP2 ist zwischen zwei benachbarten, in Richtung der X-Achse unmittelbar hintereinander angeordneten Markierungsbereichen jeweils ein Spiegelbereich ausgebildet, sodass die vorstehend genannten Markierungsbereiche M1, M2, M3, M4, M5, M6, M7, M8, M9, M10, M11, M12, M13 bzw. M14 alternierend mit Spiegelbereichen S1, S2, S3, S4, S5, S6, S7, S8, S9, S10, S11, S12, S13, S14 bzw. S15 in einer Reihe hintereinander angeordnet sind. Die Markierungsbereiche M1, M2, M3, M4, M5, M6, M7, M8, M9, M10, M11, M12, M13 und M14 der zweiten Spur SP2 sind jedoch hinsichtlich ihrer räumlichen Erstreckung in Richtung der X-Achse nicht alle identisch miteinander. Ebenso sind die Spiegelbereiche S1, S2, S3, S4, S5, S6, S7, S8, S9, S10, S11, S12, S13, S14 und S15 hinsichtlich ihrer räumlichen Erstreckung in Richtung der X-Achse nicht alle identisch miteinander. Auf diese Weise ermöglichen die verschiedenen Markierungsbereiche und Spiegelbereiche der zweiten Spur SP2 eine Codierung mehrerer verschiedener Referenzpositionen, welche mehrere verschiedene absolute Positionen jeweils eindeutig definieren.

Die Fig. 3 zeigt die Abtastvorrichtung 30 in einer Anordnung mit Bezug auf die Massverkörperung 20, in welcher Anordnung die Markierungen der Massverkörperung 20 mittels der Abtastvorrichtung 30 abgetastet werden können, um eine Position des zweiten Linearführungskörpers 3 mit Bezug auf den ersten Linearführungskörpers 2 zu bestimmen.

Die Fig. 3 zeigt die Linearführungsvorrichtung 1 gemäss Fig. 1 in einem Querschnitt senkrecht zur X-Achse, jedoch in einer Darstellung, in welcher ein erfindungsgemäss ausgebildeter Antireflexkörper nicht implementiert und deshalb nicht sichtbar ist.

Wie Fig. 3 in Kombination mit Fig. 1 andeutet, ist die Abtastvorrichtung 30 am zweiten Linearführungskörper 3 befestigt und an einem Bereich des zweiten Linearführungskörpers 3 derart gestützt, dass die Abtastvorrichtung 30 in einem vorgegebenen Abstand zur Massverkörperung 20 angeordnet ist, wenn der zweite Linearführungskörper 3 relativ zum ersten Linearführungskörper 1 eine lineare Bewegung in der X-Richtung durchführt.

In Fig. 3 ist insbesondere (in einem Querschnitt senkrecht zur X-Achse) die Abtastvorrichtung 30 zusammen mit einem Bereich des zweiten Linearführungskörpers 3 dargestellt, auf welchen die Abtastvorrichtung 30 gestützt ist. Ein Bereich des zweiten Linearführungskörpers 3, auf welchen die Abtastvorrichtung 30 gestützt ist, hat die Funktion, die Abtastvorrichtung 30 zu tragen, und soll dementsprechend im Folgenden im Kontext der vorliegenden Erfindung mit dem Begriff "Tragkörper" bezeichnet werden und ausserdem mit dem Bezugszeichen "50" identifiziert werden.

Wie in Fig. 1 und 3 angedeutet, ist der Tragkörper 50 im vorliegenden Beispiel als ein integraler Bestandteil des zweiten Linearführungskörpers 3 ausgebildet. Es sei darauf hingewiesen, dass der Tragkörper 50 alternativ auch als ein separates Bauteil ausgebildet sein kann, welches ortsfest mit Bezug auf den zweiten Linearführungskörper 3 angeordnet ist, jedoch räumlich getrennt vom zweiten Linearführungskörpers 3 angeordnet sein kann.

Wie in Fig. 3 angedeutet, weist der Tragkörper 50 eine erste Oberfläche 50.1 und eine der ersten Oberfläche 50.1 gegenüberliegende zweite Oberfläche 50.2 auf, wobei sich im vorliegenden Beispiel die erste Oberfläche 50.1 und die zweite Oberfläche 50.2 im Wesentlichen parallel zum Oberflächenbereich Oxy des ersten Linearführungskörpers 2 erstrecken, auf welchem die Massverkörperung 20 ausgebildet ist. Im vorliegenden Beispiel weist die zweite Oberfläche 50.2 mit Bezug auf die Massverkörperung 20 einen geringeren Abstand auf als die erste Oberfläche 50.1.

Wie in Fig. 3 angedeutet, ist die Abtastvorrichtung 30 an der ersten Oberfläche 50.1 des Tragkörpers 50 angeordnet. Diese Anordnung der Abtastvorrichtung 30 hat den Vorteil, dass die Abtastvorrichtung 30 von einer von der Massverkörperung 20 entfernten Oberfläche der Tragkörpers 50 her zugänglich ist, selbst wenn der Tragkörpers 50 in einem vorgegebenen Abstand zur Massverkörperung 20 montiert ist. Diese Anordnung der Abtastvorrichtung 30 kann beispielsweise eine Montage der Abtastvorrichtung 30 am Tragkörper 50 oder eine Demontage der Abtastvorrichtung 30 vom Tragkörper 50 vereinfachen.

Um ein optisches Abtasten der Markierungen der Massverkörperung 20 zu ermöglichen, weist der Tragkörper 50 einen Durchgangskanal DK1 auf, welcher sich entlang einer Längsachse LA1 des Durchgangskanals DK1 durchgehend zwischen der ersten Oberfläche 50.1 und der zweiten Oberfläche 50.2 des Tragkörpers 50 erstreckt, sodass der Durchgangskanal DK1 von einer sich entlang der Längsachse LA1 des Durchgangskanals DK1 erstreckenden Seitenfläche SF1 begrenzt ist.

Wie in Fig. 3 angedeutet, erstreckt sich der Durchgangskanal DK1 durch den Tragkörper 50 derart, dass sich die Längsachse LA1 des Durchgangskanals DK1 im Wesentlichen senkrecht zum Oberflächenbereich Oxy des ersten Linearführungskörpers 2 erstreckt, auf welchem die Massverkörperung 20 ausgebildet ist.

Wie aus Fig. 3 ersichtlich, sind die Abtastvorrichtung 30 und die Massverkörperung 20 mit Bezug auf den Durchgangskanal DK1 des Tragkörpers 50 derart angeordnet, dass die Abtastvorrichtung 30 und die Massverkörperung 20 auf einander gegenüberliegenden Seiten des Tragkörpers 50 platziert sind, wobei der Durchgangskanal DK1 sich zwischen der Abtastvorrichtung 30 und der Massverkörperung 20 derart erstreckt, dass die Abtastvorrichtung 30 und die Massverkörperung 20 auf der Längsachse LA1 des Durchgangskanals DK1 liegen.

Um eine einfache Montage der Abtastvorrichtung 30 in einer stabilen Lage am Tragkörper 50 zu ermöglichen, ist an der ersten Oberfläche 50.1 des Tragkörpers 50 eine sich radial zur Längsachse LA1 des Durchgangskanals DK1 des Tragkörpers 50 erstreckende erste Auflagefläche AF1 ausgebildet, welche erste Auflagefläche AF1 im vorliegenden Beispiel dazu dient, die Abtastvorrichtung 30 zu stützen bzw. zu tragen. Dementsprechend ist im vorliegenden Beispiel die Abtastvorrichtung 30 am Tragkörper 50 derart befestigt, dass die Abtastvorrichtung 30 mit der Auflagefläche AF1 in Kontakt gebracht ist somit auf der Oberfläche 50.1 bzw. insbesondere auf der Auflagefläche AF1 sitzt.

Wie in Fig. 3 angedeutet, kann der Tragkörper (optional) derart ausgebildet sein, dass der Tragkörper 50 an der ersten Oberfläche 50.1 eine erste Ausnehmung A1 aufweist, welche sich longitudinal zur Längsachse LA1 des Durchgangskanals DK1 des Tragkörpers 50 erstreckt, wobei die erste Auflagefläche AF1 des Tragkörpers 50 in der ersten Ausnehmung A1 ausgebildet ist, sodass die erste Ausnehmung A1 durch die erste Auflagefläche AF1 begrenzt ist. Im vorliegenden Beispiel ist die Abtastvorrichtung 30 derart an der ersten Auflagefläche AF1 angeordnet, dass sich zumindest ein Teil der Abtastvorrichtung 30 entlang der Längsachse LA1 des Durchgangskanals DK1 durch die erste Ausnehmung A1 erstreckt.

Im Folgenden werden mit Bezug auf die Fig. 3 Einzelheiten der Abtastvorrichtung 30 beschrieben, welche die Funktion der Abtastvorrichtung 30 im Hinblick auf ein optisches Abtasten der Markierungen der Massverkörperung 20 betreffen. Es sei darauf hingewiesen, dass die Fig. 3 die Abtastvorrichtung 30 in einer schematischen Darstellung zeigt, welche relevante Funktionselemente der Abtastvorrichtung 30 hinsichtlich ihrer Funktion charakterisieren soll, die physische Struktur einer konkreten Realisierung der jeweiligen Funktionselemente jedoch gegebenenfalls vereinfacht offenbart.

Wie aus Fig. 3 ersichtlich, weist die Abtastvorrichtung 30 an einer der Massverkörperung 20 zugewandten Seite eine Lichtquelle 35 (beispielsweise eine LED) auf, welche dazu bestimmt ist, Licht zur Beleuchtung zumindest eines Bereichs der Massverkörperung 20 zu generieren. Zu diesem Zweck ist die Lichtquelle 35 ausgebildet, Licht zu erzeugen, welches durch den Durchgangskanal DK1 des Tragkörpers 50 propagiert, sodass ein Teil des von der Lichtquelle 35 erzeugten Lichts auf die erste Spur SP1 der Massverkörperung 20 und ein anderer Teil des von der Lichtquelle 35 ausgestrahlten Lichts auf die zweite Spur SP2 der Massverkörperung 20 trifft.

Wie in Fig. 3 angedeutet, ist die Lichtquelle 35 derart ausgebildet, dass das von der Lichtquelle 35 ausgestrahlte Licht entlang der Längsachse LA1 des Durchgangskanals DK1 derart propagiert, dass das zur Massverkörperung 20 propagierende Licht mit Bezug auf die Längsachse LA1 des Durchgangskanals DK1 divergiert. Zur Veranschaulichung dieses Sachverhalts ist das von der Lichtquelle 35 ausgestrahlte und auf die Massverkörperung einfallende Licht in der Fig. 3 durch ein Bündel von vier Lichtstrahlen repräsentiert, welche mit "LE1", "LE2", "LE3" bzw. "LE4" bezeichnet sind und sich dadurch unterscheiden, dass die Lichtstrahlen LE1, LE2, LE3 und LE4, ausgehend von der Lichtquelle 35, mit unterschiedlichen Winkeln mit Bezug auf die Längsachse LA1 des Durchgangskanals DK1 geneigt sind und dementsprechend mit unterschiedlichen Winkeln mit Bezug auf die Längsachse LA1 des Durchgangskanals DK1 auf den Oberflächenbereich Oxy des ersten Linearführungskörpers 2 treffen, auf welchem die Massverkörperung 20 ausgebildet ist. In der Darstellung gemäss Fig. 3 ist angenommen, dass die Lichtstrahlen LE1 und LE2 auf die Markierungsbereiche und/oder Spiegelbereiche der ersten Spur SP1 der Massverkörperung 20 treffen, während die Lichtstrahlen LE3 und LE4 auf die Markierungsbereiche und/oder Spiegelbereiche der zweiten Spur SP2 der Massverkörperung 20 treffen.

Das von der Lichtquelle 35 erzeugte und auf die Massverkörperung 20 einfallende Licht wird an den Spiegelbereichen und Markierungsbereichen der Massverkörperung 20 auf unterschiedliche Weisen reflektiert und/oder gestreut. Da das auf die Massverkörperung 20 einfallende Licht in unterschiedlichen Bereichen der Massverkörperung 20 in unterschiedlichen Winkeln mit Bezug auf die Längsachse LA1 des Durchgangskanals DK1 auf Oberflächenbereich Oxy des ersten Linearführungskörpers 2 treffen, wird das auf unterschiedliche Bereiche der Massverkörperung 20 eintreffende Licht in der Regel in unterschiedliche Richtungen mit Bezug auf die Längsachse LA1 des Durchgangskanals DK1 reflektiert und/oder gestreut.

Zur Veranschaulichung dieses Sachverhalts ist in der Darstellung gemäss Fig. 3 angenommen, dass das durch den Lichtstrahl LE1 repräsentierte Licht an der Massverkörperung 20 derart reflektiert und/oder gestreut wird, dass das reflektierte bzw. gestreute Licht durch einen Lichtstrahl repräsentiert ist, welcher mit "LR1" bezeichnet ist. Analog hierzu ist angenommen, dass das durch die Lichtstrahlen LE2, LE3 bzw. LE4 repräsentierte Licht an der Massverkörperung 20 derart reflektiert und/oder gestreut wird, dass das reflektierte bzw. gestreute Licht durch Lichtstrahlen repräsentiert ist, welche mit "LR2", "LR3" bzw. "LR4" bezeichnet sind. Wie in Fig. 3 angedeutet, propagiert das durch die Lichtstrahlen LR1, LR2, LR3 bzw. LR4 repräsentierte Licht - ausgehend vom Oberflächenbereich Oxy des ersten Linearführungskörpers 2 - jeweils mit unterschiedlichen Winkeln relativ zur Längsachse LA1 des Durchgangskanals DK1.

Um ein optisches Abtasten der Massverkörperung 20 zu ermöglichen, umfasst die Abtastvorrichtung 30 einen Lichtsensor 40 zum Erfassen des von der Lichtquelle 35 erzeugten und an der Massverkörperung 20 reflektierten und/oder gestreuten Lichts. Der Lichtsensor 40 ist im vorliegenden Beispiel insbesondere ausgebildet, das an der ersten Spur SP1 der Massverkörperung 20 reflektierte und/oder gestreute Licht und das an der zweiten Spur SP2 der Massverkörperung 20 reflektierte und/oder gestreute Licht zu detektieren und die räumliche Verteilung der Intensität des an der ersten Spur SP1 der Massverkörperung 20 reflektierten und/oder gestreuten Lichts und die räumliche Verteilung der Intensität des an der zweiten Spur SP2 der Massverkörperung 20 reflektierten und/oder gestreuten Lichts zu analysieren.

Zu diesem Zweck umfasst der Lichtsensor 40 eine erste Anordnung 40.1 einer Mehrzahl von Fotosensoren zum Erfassen des an der ersten Spur SP1 der Massverkörperung 20 reflektierten und/oder gestreuten Lichts und eine zweite Anordnung 40.2 einer Mehrzahl von Fotosensoren zum Erfassen des an der zweiten Spur SP2 der Massverkörperung 20 reflektierten und/oder gestreuten Lichts und ausserdem (in den Figuren nicht dargestellte) weitere elektronische Elemente, welche dazu ausgebildet sind, entsprechende Ausgangssignale der ersten Anordnung 40.1 von Fotosensoren und/oder Ausgangssignale der zweiten Anordnung 40.2 von Fotosensoren auszuwerten.

Wie erwähnt ist die Massverkörperung 20 derart konzipiert, dass die einzelnen Markierungsbereiche, d.h. die Markierungsbereiche M der ersten Spur SP1 und die Markierungsbereiche M1, M2, M3, M4, M5, M6, M7, M8, M9, M10, M11, M12, M13 und M14 der zweiten Spur SP2, ein geringeres Reflexionsvermögen für Licht aufweisen als die jeweiligen Spiegelbereiche, d.h. die Spiegelbereiche S der ersten Spur SP1 und Spiegelbereiche S1, S2, S3, S4, S5, S6, S7, S8, S9, S10, S11, S12, S13, S14 bzw. S15 der zweiten Spur.

Unter den vorstehend genannten Umständen weist die räumliche Verteilung der Intensität des an der ersten Spur SP1 der Massverkörperung 20 reflektierten und/oder gestreuten Lichts in der X-Richtung eine räumliche Variation auf, welche der räumlichen Anordnung der Spiegelbereiche S der ersten Spur SP1 in der X-Richtung entspricht. Entsprechend weist die räumliche Verteilung der Intensität des an der zweiten Spur SP2 der Massverkörperung 20 reflektierten und/oder gestreuten Lichts in der X-Richtung eine räumliche Variation auf, welche der räumlichen Anordnung der Spiegelbereiche S1, S2, S3, S4, S5, S6, S7, S8, S9, S10, S11, S12, S13, S14 und S15 der zweiten Spur SP2 in der X-Richtung entspricht.

Wie in Fig. 3 angedeutet, umfasst die erste Anordnung 40.1 von Fotosensoren eine (in der Fig. 3 nicht dargestellte) Vielzahl von Fotosensoren, welche in der X-Richtung in einer Reihe hintereinander angeordnet sind. Entsprechend umfasst die zweite Anordnung 40.2 von Fotosensoren eine (in der Fig. 3 nicht dargestellte) Vielzahl von Fotosensoren, welche in der X-Richtung in einer Reihe hintereinander angeordnet sind.

Wie in Fig. 3 angedeutet, kann das von der Lichtquelle 35 erzeugte und an der Massverkörperung 20 reflektierte und/oder gestreute Licht die erste Anordnung 40.1 von Fotosensoren und die zweite Anordnung 40.2 von Fotosensoren des Lichtsensors 40 auf unterschiedlichen Wegen erreichen. Das von der Lichtquelle 35 ausgestrahlte und gemäss dem Lichtstrahl LE1 auf die erste Spur SP1 der Massverkörperung 20 auftreffende Licht wird beispielsweise an der ersten Spur SP1 der Massverkörperung 20 derart reflektiert und/oder gestreut, dass das entsprechend reflektierte und/oder gestreute Licht gemäss dem in Fig. 3 dargestellten Lichtstrahl LR1 durch den Durchgangskanal DK1 des Tragkörpers 50 propagiert und - ausgehend von der ersten Spur SP1 der Massverkörperung 20 - die erste Anordnung 40.1 von Fotosensoren auf einem direkten Weg erreicht. Das gemäss dem Lichtstrahl LR1 propagierende Licht ist deshalb geeignet, mittels der ersten Anordnung 40.1 von Fotosensoren detektiert zu werden.

Das von der Lichtquelle 35 ausgestrahlte und gemäss dem Lichtstrahl LE2 auf die erste Spur SP1 der Massverkörperung 20 auftreffende Licht wird hingegen an der ersten Spur SP1 der Massverkörperung 20 derart reflektiert und/oder gestreut, dass das entsprechend reflektierte und/oder gestreute Licht gemäss dem in Fig. 3 dargestellten Lichtstrahl LR2 durch den Durchgangskanal DK1 des Tragkörpers 50 propagiert und dementsprechend - ausgehend von der ersten Spur SP1 der Massverkörperung 20 - zunächst auf die Seitenwand SF1 des Durchgangskanals DK1 trifft und an der Seitenwand SF1 schliesslich derart reflektiert und/oder gestreut wird, dass das gemäss dem Lichtstrahl LR2 propagierende Licht schliesslich ebenfalls auf die erste Anordnung 40.1 von Fotosensoren trifft. Das gemäss dem Lichtstrahl LR2 propagierende Licht ist deshalb geeignet, die erste Anordnung 40.1 von Fotosensoren auf einem indirekten Weg (im vorliegenden Beispiel nach einer Reflexion oder Streuung am Tragkörper 50) zu erreichen und ebenfalls mittels der ersten Anordnung 40.1 von Fotosensoren detektiert zu werden.

Wie in Fig. 3 ebenfalls angedeutet, kann das von der Lichtquelle 35 ausgestrahlte und gemäss dem Lichtstrahl LE3 auf die zweite Spur SP2 der Massverkörperung 20 auftreffende Licht an der zweiten Spur SP2 der Massverkörperung 20 derart reflektiert und/oder gestreut werden, dass das entsprechend reflektierte und/oder gestreute Licht gemäss dem in Fig. 3 dargestellten Lichtstrahl LR3 durch den Durchgangskanal DK1 des Tragkörpers 50 propagiert und - ausgehend von der zweiten Spur SP2 der Massverkörperung 20 - die zweite Anordnung 40.2 von Fotosensoren auf einem direkten Weg erreicht. Das gemäss dem Lichtstrahl LR3 propagierende Licht ist deshalb geeignet, mittels der zweiten Anordnung 40.2 von Fotosensoren detektiert zu werden.

Das von der Lichtquelle 35 ausgestrahlte und gemäss dem Lichtstrahl LE4 auf die zweite Spur SP2 der Massverkörperung 20 auftreffende Licht wird hingegen an der zweiten Spur SP2 der Massverkörperung 20 derart reflektiert und/oder gestreut, dass das entsprechend reflektierte und/oder gestreute Licht gemäss dem in Fig. 3 dargestellten Lichtstrahl LR4 durch den Durchgangskanal DK1 des Tragkörpers 50 propagiert und - ausgehend von der zweiten Spur SP2 der Massverkörperung 20 - zunächst auf die Seitenwand SF1 des Durchgangskanals DK1 trifft und an der Seitenwand SF1 schliesslich derart reflektiert und/oder gestreut wird, dass das gemäss dem Lichtstrahl LR4 propagierende Licht schliesslich ebenfalls auf die zweite Anordnung 40.2 von Fotosensoren trifft. Das gemäss dem Lichtstrahl LR4 propagierende Licht ist deshalb geeignet, die zweite Anordnung 40.2 von Fotosensoren auf einem indirekten Weg (im vorliegenden Beispiel nach einer Reflexion oder Streuung am Tragkörper 50) zu erreichen und ebenfalls mittels der zweiten Anordnung 40.2 von Fotosensoren detektiert zu werden.

Wie bereits erwähnt, beruht ein optisches Abtasten der Massverkörperung 20 mittels der Abtastvorrichtung 30 u.a. darauf, das an der ersten Spur SP1 der Massverkörperung 20 reflektierte und/oder gestreute Licht und das an der zweiten Spur SP2 der Massverkörperung 20 reflektierte und/oder gestreute Licht zu detektieren und die räumliche Verteilung der Intensität des an der ersten Spur SP1 der Massverkörperung 20 reflektierten und/oder gestreuten Lichts und die räumliche Verteilung der Intensität des an der zweiten Spur SP2 der Massverkörperung 20 reflektierten und/oder gestreuten Lichts zu analysieren.

Im Falle der in Fig. 3 dargestellten Anordnung der Abtastvorrichtung 30 resultiert die räumliche Verteilung des von der ersten Anordnung 40.1 von Fotosensoren detektierten Lichts aus einer Überlagerung des an der ersten Spur SP1 der Massverkörperung 20 reflektierten und/oder gestreuten Lichts, welches (entsprechend dem Lichtstrahl LR1) durch den Durchgangskanal DK1 des Tragkörpers 50 propagiert und die erste Anordnung 40.1 von Fotosensoren auf einem direkten Weg (ohne Reflexion oder Streuung am Tragkörper 50) erreicht, und des an der ersten Spur SP1 der Massverkörperung 20 reflektierten und/oder gestreuten Lichts, welches (entsprechend dem Lichtstrahl LR2) durch den Durchgangskanal DK1 des Tragkörpers 50 propagiert und die erste Anordnung 40.1 von Fotosensoren auf einem indirekten Weg (infolge einer Reflexion oder Streuung am Tragkörper 50) erreicht.

Die erste Anordnung 40.1 von Fotosensoren kann im vorliegenden Beispiel insbesondere dazu dienen, bei einer Bewegung des zweiten Linearführungskörper 3 relativ zum ersten Linearführungskörper 2 den jeweils zurückgelegten Weg durch eine Auswertung von periodischen Änderungen der Signale der Fotosensoren der ersten Anordnung 40.1 während der Bewegung des zweiten Linearführungskörpers 3 zu ermitteln.

Die vorstehend genannte Überlagerung des die erste Anordnung 40.1 auf direktem Wege erreichenden Lichts und des die erste Anordnung 40.1 auf indirektem Wege erreichenden Lichts erschwert eine Auswertung der mittels der ersten Anordnung 40.1 von Fotosensoren erzeugten Signale. Beispielsweise kann Licht, welches an einem bestimmten Spiegelbereich S der ersten Spur SP1 der Massverkörperung 20 reflektiert und/oder gestreut wird und die ersten Anordnung 40.1 von Fotosensoren auf einem direkten Weg durch den Durchgangskanal DK1 erreicht, nicht auf denselben Fotosensor oder dieselbe Gruppe von mehreren Fotosensoren der ersten Anordnung 40.1 von Fotosensoren treffen wie das Licht, welches an demselben Spiegelbereich S der ersten Spur SP1 der Massverkörperung 20 reflektiert und/oder gestreut wird und die ersten Anordnung 40.1 von Fotosensoren auf einem indirekten Weg durch den Durchgangskanal DK1 erreicht. Die vorstehend genannte Überlagerung des die erste Anordnung 40.1 auf direktem Wege erreichenden Lichts und des die erste Anordnung 40.1 auf indirektem Wege erreichenden Lichts kann deshalb bei einer Bewegung des zweiten Linearführungskörper 3 die Grösse der jeweils messbaren Änderungen der Signale der einzelnen Fotosensoren der ersten Anordnung 40.1 von Fotosensoren beeinflussen und demensprechend die Genauigkeit einer Bestimmung des jeweils vom zweiten Linearführungskörper 3 zurückgelegten Weges signifikant reduzieren.

Im Falle der in Fig. 3 dargestellten Anordnung der Abtastvorrichtung 30 resultiert die räumliche Verteilung des von der zweiten Anordnung 40.2 von Fotosensoren detektierten Lichts aus einer Überlagerung des an der zweiten Spur SP2 der Massverkörperung 20 reflektierten und/oder gestreuten Lichts, welches (entsprechend dem Lichtstrahl LR3) durch den Durchgangskanal DK1 des Tragkörpers 50 propagiert und die zweite Anordnung 40.2 von Fotosensoren auf einem direkten Weg (ohne Reflexion oder Streuung am Tragkörper 50) erreicht, und des an der zweiten Spur SP2 der Massverkörperung 20 reflektierten und/oder gestreuten Lichts, welches (entsprechend dem Lichtstrahl LR4) durch den Durchgangskanal DK1 des Tragkörpers 50 propagiert und die zweite Anordnung 40.2 von Fotosensoren auf einem indirekten Weg (infolge einer Reflexion oder Streuung am Tragkörper 50) erreicht.

Aufgrund der vorstehend genannten Überlagerung kann Licht, welches an einem bestimmten Spiegelbereich (S1, S2, S3, S4, S5, S6, S7, S8, S9, S10, S11, S12, S13, S14 bzw. S15) der zweiten Spur SP2 der Massverkörperung 20 reflektiert und/oder gestreut wird und die zweite Anordnung 40.2 von Fotosensoren auf einem direkten Weg durch den Durchgangskanal DK1 erreicht, nicht auf denselben Fotosensor oder dieselbe Gruppe von mehreren Fotosensoren der zweite Anordnung 40.2 von Fotosensoren treffen wie das Licht, welches an demselben Spiegelbereich der zweiten Spur SP2 der Massverkörperung 20 reflektiert und/oder gestreut wird und die zweite Anordnung 40.2 von Fotosensoren auf einem indirekten Weg durch den Durchgangskanal DK1 erreicht. Dieser Effekt hat den Nachteil, dass bei einer Bewegung des zweiten Linearführungskörper 3 relativ zum ersten Linearführungskörper 2 die jeweils messbaren Änderungen der Signale der Fotosensoren der zweiten Anordnung 40.2 die jeweiligen Positionen der einzelnen Markierungsbereiche M1-M14 nur relativ ungenau andeuten. Dies kann die Genauigkeit, mit welcher die Abtastvorrichtung 30 mittels einer Abtastung der zweiten Spur SP2 der Massverkörperung 20 eine absolute Position des zweiten Linearführungskörper 3 relativ zum ersten Linearführungskörper 2 bestimmt werden soll, erheblich reduzieren.

Die Genauigkeit, mit welcher mittels einer Auswertung der Signale der einzelnen Fotosensoren der ersten Anordnung 40.1 von Fotosensoren ein von dem zweiten Linearführungskörper zurückgelegter Weg bestimmt werden kann, oder die Genauigkeit, mit welcher mittels einer Auswertung der Signale der einzelnen Fotosensoren der zweiten Anordnung 40.2 von Fotosensoren eine absolute Position des zweiten Linearführungskörper 3 mit Bezug auf eine der Markierungen M1-M14 der zweiten Spur SP2 der Massverkörperung 20 bestimmt werden kann, wird gemäss der Erfindung verbessert durch eine Implementierung eines Antireflexkörpers, welcher am Tragkörper 50 angeordnet werden kann und weitgehend verhindern soll, dass an der Massverkörperung 20 reflektiertes Licht durch den Durchgangskanal DK1 auf einem indirekten Weg (infolge einer Reflexion oder Streuung am Tragkörper 50) zu der ersten Anordnung 40.1 von Fotosensoren oder zu der zweiten Anordnung 40.2 von Fotosensoren des Lichtsensors 40 gelangen kann.

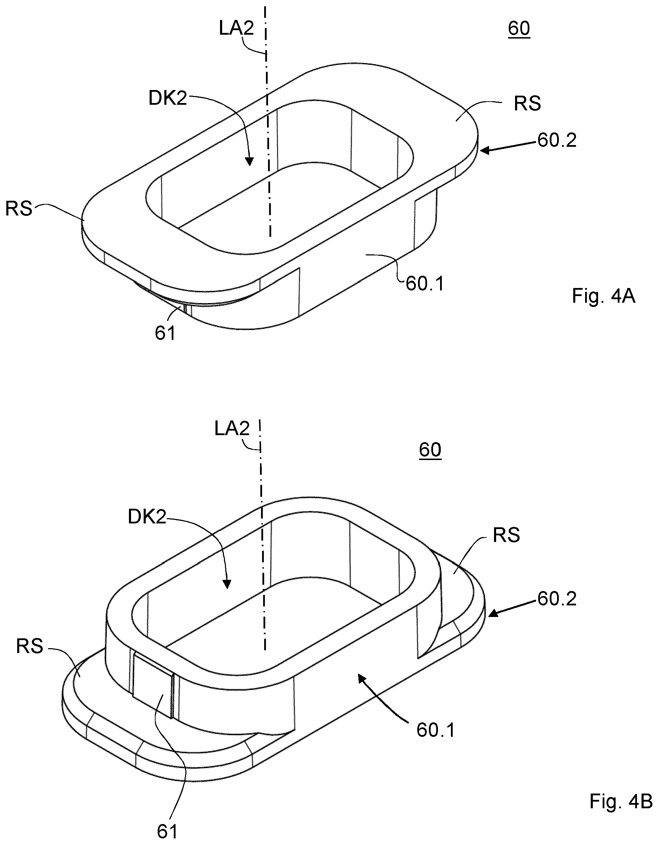

Verschiedene Ausführungsformen eines entsprechenden Antireflexkörpers werden im Folgenden erläutert mit Bezug auf die Figuren 4A, 4B, 5A, 5B, 6A, 6B, 7 und 8.

Die Fig. 4A, 4B, 5A, 5B, 6A und 6B zeigen (als eine erste Ausführungsform) einen Antireflexkörper 60 und dessen Implementierung in der Linearführungsvorrichtung 1 bzw. am Tragkörper 50.

Die Fig. 4A und 4B zeigen den Antireflexkörper 60 aus verschiedenen Perspektiven in einem Zustand, in dem der Antireflexkörper 60 isoliert und von dem zweiten Linearführungskörper 3 bzw. dem Tragkörper 50 separiert ist.

Wie aus Fig. 4A und 4B ersichtlich, ist der Antireflexkörper 60 konzipiert als ein Bauteil, welches einen ersten Abschnitt 60.1 und mindestens einen zweiten Abschnitt 60.2 aufweist. Es sei darauf hingewiesen, dass der Abschnitt 60.2 keine wesentliche Funktion im Hinblick auf die Erfindung hat: Wie im Folgenden noch erläutert wird, ermöglicht eine Ausbildung des zweiten Abschnitt 60.2 eine (optionale) Möglichkeit für eine einfache Anordnung des Antireflexkörpers 60 am Tragkörper 50, ist jedoch nicht geeignet, das durch den Durchgangskanal DK1 propagierende Licht zu beeinflussen.

Der Antireflexkörper 60 bzw. zumindest der erste Abschnitt 60.1 des Antireflexkörpers 60 besteht aus einem Material, welches geeignet ist, mittels der Lichtquelle 35 erzeugbares Licht zu absorbieren, und ausserdem gewährleistet, dass der erste Abschnitt 60.1 für das an dem mindestens einen Bereich der Massverkörperung 20 reflektierte und/oder gestreute Licht ein geringeres Reflexionsvermögen als die Seitenwand SF1 des Durchgangskanals DK1 aufweist.

Ein entsprechendes Material kann beispielsweise ein Kunststoff sein. Als Kunststoff ist u.a. Polyoxymethylene (POM) oder Polypropylencarbonat (PPC) geeignet, zumal dieser Kunststoff eine hohe Steifigkeit und eine grosse Stabilität gewährleistet und es erlaubt, den Antireflexköper 60 kostengünstig mit grosser Präzision als Formteil im Spritzgussverfahren herzustellen. Um zu erreichen, dass das hergestellte Formteil eine möglichst starke Absorption für das mittels der Lichtquelle 35 erzeugbare Licht aufweist, kann dem Kunststoff optional ein Farbstoff beigemischt sein, welcher geeignet ist, die Absorption des Lichts gegebenenfalls zu erhöhen. Durch Wahl eines geeigneten Kunststoffs und gegebenenfalls eines geeigneten Farbstoffs ist es beispielsweise möglich, den Antireflexköper 60 bzw. den ersten Abschnitt 60.1 des Antireflexkörpers 60 in Form eines vorzugsweise schwarzen Kunststoffteils bereitzustellen, welches geeignet ist, das mittels der Lichtquelle 35 erzeugbare Licht vollständig zu absorbieren, und deshalb für dieses Licht nicht transparent ist.

Der Antireflexkörper 60 ist dazu bestimmt, am Tragkörper 50 derart angeordnet zu werden, dass der erste Abschnitt 60.1 des Antireflexkörpers 60 sich durch einen ersten Teilbereich des Durchgangskanals DK1 des Tragkörpers 50 entlang der Seitenfläche SF1 des Durchgangskanals DK1 des Tragkörpers 50 erstreckt und dass neben dem ersten Abschnitt 60.1 des Antireflexkörpers 60 ein zweiter Teilbereich des Durchgangskanals DK1 des Tragkörpers 50 vorhanden ist, durch welchen zweiten Teilbereich des Durchgangskanals DK1 zumindest ein Teil des an der ersten Spur SP1 oder der zweiten Spur SP2 der Massverkörperung 20 reflektierten oder gestreuten Lichts auf einem direkten Weg passieren kann, ohne auf den Antireflexkörper 60 oder auf die Seitenfläche SF1 des Durchgangskanals DK1 zu treffen. Da der erste Abschnitt 60.1 des Antireflexkörpers 60 geeignet ist, das mittels der Lichtquelle 35 erzeugbare Licht zu absorbieren, kann eine Anordnung des ersten Abschnitts 60.1 des Antireflexkörpers 60 bewirken, dass ein anderer Teil des an der ersten Spur SP1 oder der zweiten Spur SP2 der Massverkörperung 20 reflektierten oder gestreuten Lichts, welcher in Richtung der Seitenwand SF1 des Durchgangskanals DK1 des Tragkörpers 50 reflektiert und/oder gestreut ist, auf den ersten Abschnitt 60.1 des Antireflexkörpers 60 trifft und in diesem ersten Abschnitt 60.1 des Antireflexkörpers 60 absorbierbar ist und demzufolge darin gehindert ist, an der Seitenwand SF1 des Durchgangskanals DK1 des Tragkörpers 50 reflektiert zu werden und/oder nach einer Reflexion an der Seitenwand SF1 des Durchgangskanals DK1 des Tragkörpers 50 zum Lichtsensor 40 zu gelangen und mittels des Lichtsensors 40 detektierbar zu sein.

Wie aus Fig. 4A und 4B ersichtlich, ist der Antireflexkörper 60 derart geformt, dass der Antireflexkörper 60 im ersten Abschnitt 60.1 des Antireflexkörpers 60 einen Durchgangskanal DK2 aufweist, welcher sich entlang einer Längsachse LA2 des Antireflexkörpers 60 erstreckt und radial zur Längsachse LA2 durch einen sich ringförmig um die Längsachse LA2 erstreckenden Bereich des Antireflexkörpers 60 begrenzt ist.

Wie aus Fig. 4A und 4B ebenfalls ersichtlich, weist der Antireflexkörper 60 im vorliegenden Beispiel zwei sich mit Bezug auf die Längsachse LA2 des Antireflexkörpers 60 gegenüberliegende zweite Abschnitte 60.2 auf, welche jeweils als eine sich radial zur Längsachse LA2 des Durchgangskanals DK2 erstreckende, mit dem ersten Abschnitt 60.1 des Antireflexkörpers 60 verbundene Schulter RS ausgebildet sind.

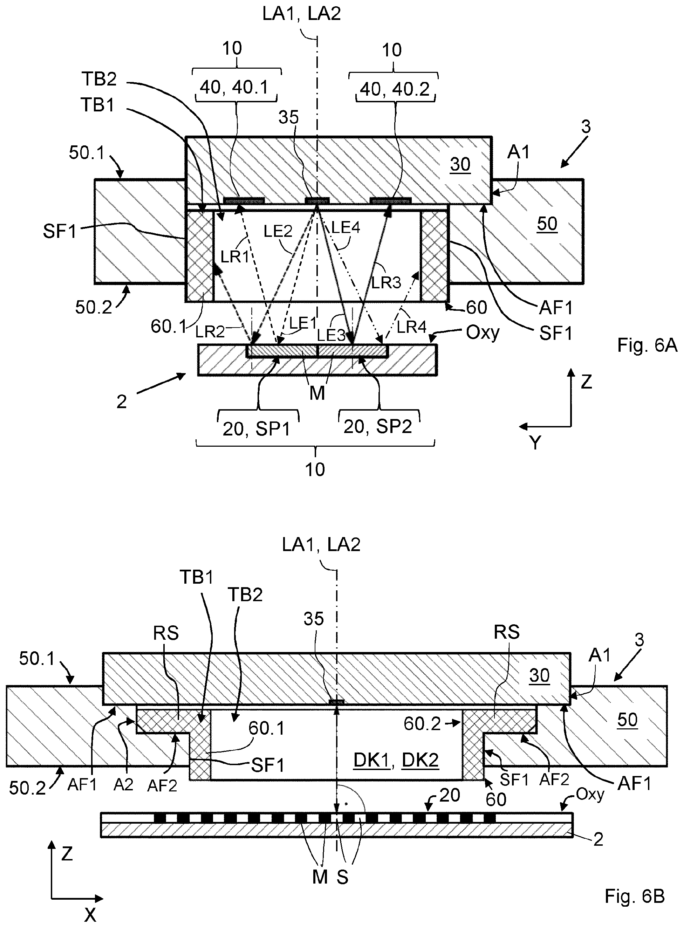

Die Fig. 5A, 5B, 6A und 6B zeigen den Antireflexkörper 60 aus verschiedenen Perspektiven in einem Zustand, in dem der Antireflexkörper 60 an dem zweiten Linearführungskörper 3 bzw. an dem Tragkörper 50 implementiert ist.

Um den Antireflexkörper 60 an dem zweiten Linearführungskörper 3 bzw. an dem Tragkörper 50 zu implementieren, kann der Antireflexkörper 60 als Ganzes von der Seite des Tragkörpers 50, welche durch die erste Oberfläche 50.1 des Tragkörpers 50 begrenzt ist, in die erste Ausnehmung A1 des Tragkörpers 50 eingesetzt werden, sodass der erste Abschnitt 60.1 des Antireflexkörpers 60 in den Durchgangskanal DK1 des Tragkörpers 50 ragt.

Die Fig. 5A zeigt die Anordnung des Antireflexkörpers 60 am Tragkörper 50 aus einer Perspektive, welche einen Blick in die erste Ausnehmung A1 des Tragkörpers 50 von der Seite des Tragkörpers 50 her ermöglicht, welche durch die erste Oberfläche 50.1 des Tragkörpers 50 begrenzt ist. In der Ansicht gemäss Fig. 5A ist insbesondere die Anordnung der beiden zweiten Abschnitte 60.2 des Antireflexkörpers 60 bzw. der beiden Schultern RS mit Bezug auf die erste Oberfläche 50.1 des Tragkörpers 50 sichtbar. Um in der Darstellung gemäss Fig. 5A zu gewährleisten, dass ein freier Blick auf die beiden zweiten Abschnitte 60.2 des Antireflexkörpers 60 bzw. die beiden Schultern RS möglich ist und die räumlichen Erstreckungen der beiden zweiten Abschnitte 60.2 des Antireflexkörpers 60 bzw. die beiden Schultern RS vollumfänglich erkennbar sind, ist in der Darstellung gemäss Fig. 5A die Abtastvorrichtung 30 nicht präsent. Ausserdem ist der zweite Linearführungskörper 3 bzw. der Tragkörper 50 in der Fig. 5A derart dargestellt, dass ein Teilbereich TB des zweiten Linearführungskörpers 3 bzw. des Tragkörpers 50 im Vergleich zu der Darstellung gemäss Fig. 1 entfernt ist (dieser entfernte Teilbereich TB ist in der Darstellung gemäss Fig. 5A durch in der Fig. 5A dargestellte, schraffierte Flächen begrenzt).

Die Fig. 5b zeigt die Anordnung des Antireflexkörpers 60 am Tragkörper 50 aus einer Perspektive, welche einen Blick auf den ersten Abschnitt 60.1 des Antireflexkörpers 60 von der Seite des Tragkörpers 50 her ermöglicht, welche durch die zweite Oberfläche 50.2 des Tragkörpers 50 begrenzt ist.

Die Fig. 6A bzw. 6B zeigen (in einem Querschnitt senkrecht zur X-Richtung bzw. in einem Längsschnitt entlang der X-Richtung) die Anordnung des Antireflexköpers 60 mit Bezug auf den Tragkörper 50, die Abtastvorrichtung 30 und die Massverkörperung 20.

Um eine Platzierung des Antireflexkörpers 60 am Tragkörper 50 separat von der Abtastvorrichtung 30 zu ermöglichen, weist der Tragkörper 50 im vorliegenden Beispiel an der ersten Oberfläche 50.1 eine zweite Ausnehmung A2 auf, welche neben der ersten Auflagefläche AF1 derart ausgebildet ist, dass sich die zweite Ausnehmung A2 longitudinal zur Längsachse LA1 des Durchgangskanals DK1 des Tragkörpers 50 erstreckt und in einem Bereich der zweiten Ausnehmung A2 durch eine zweite Auflagefläche AF2 begrenzt ist, welche sich radial zur Längsachse LA1 des Durchgangskanals DK1 des Tragkörpers 50 erstreckt (Fig. 6B).

Wenn der Antireflexkörper 60 am Tragkörper 50 implementiert ist, dann ist der Antireflexkörper 60 derart angeordnet, dass sich die beiden zweiten Abschnitte 60.2 bzw. die beiden Schultern RS des Antireflexkörpers 60 radial zur Längsachse LA1 des Durchgangskanals DK1 des Tragkörpers 50 erstrecken und mit der zweiten Auflagefläche AF2 des Tragkörpers 50 in Kontakt gebracht sind (Fig. 6B). Dabei ist der erste Abschnitt 60.1 des Antireflexkörpers 60 im Durchgangskanal DK1 des Tragkörpers 50 derart angeordnet, dass der erste Abschnitt 60.1 des Antireflexkörpers 60 sich durch einen ersten Teilbereich TB1 des Durchgangskanals DK1 des Tragkörpers 50 entlang der Seitenfläche SF1 des Durchgangskanals DK1 des Tragkörpers 50 erstreckt und ausserdem der Durchgangskanal DK2 des Antireflexkörpers 60 sich entlang der Längsachse LA1 des Durchgangskanals DK1 des Tragkörpers 50 erstreckt. In der vorstehend genannten Anordnung des Antireflexkörpers 60 bildet der Durchgangskanal DK2 des Antireflexkörpers 60 einen neben dem ersten Abschnitt 60.1 des Antireflexkörpers 60 angeordneten zweiten Teilbereich TB2 des Durchgangskanals DK1 des Tragkörpers 50, welcher nicht vom Antireflexkörper 60 ausgefüllt ist. Dementsprechend kann Licht, welches entlang der Längsachse LA2 des Antireflexkörpers 60 propagiert, den Durchgangskanal DK2 des Antireflexkörpers 60 und den Durchgangskanals DK1 des Tragkörpers 50 jeweils unbeeinflusst vom Antireflexkörper 60 passieren.

Wie aus Fig. 5B, 6A und 6B ersichtlich, ist die Form des ersten Abschnitts 60.1 des Antireflexkörpers 60 an die Form des Durchgangskanals DK) des Tragkörpers 50 angepasst, sodass, wenn der Antireflexkörpers 60 am Tragkörper 50 implementiert ist, der erste Abschnitt 60.1 des Antireflexkörpers 60 mit einer (mit Bezug auf die Längsachse LA2 des Antireflexkörpers 60) radial äusseren Seitenoberfläche zumindest an einem oder mehreren Bereichen der Seitenfläche SF1 des Durchgangskanals DK1 des Tragkörpers 50 anliegt. Die Form des ersten Abschnitts 60.1 des Antireflexkörpers 60 kann so gewählt sein, dass der erste Abschnitt 60.1 des Antireflexkörpers 60 in den Durchgangskanal DK1 des Tragkörpers 50 einführbar und dabei zwischen verschiedenen Bereichen der Seitenfläche SF1 des Durchgangskanals DK1 des Tragkörpers 50 einklemmbar ist, um den Antireflexkörper 60 in einer vorgegebenen Position mit Bezug auf den Tragkörper 50 möglichst spielfrei halten zu können. Zu diesem Zweck kann (wie in Fig. 4A, 4B und 5B angedeutet) der erste Abschnitt 60.1 des Antireflexkörpers 60 an seiner (mit Bezug auf die Längsachse LA2 des Antireflexkörpers 60) radial äusseren Seitenoberfläche eine oder mehrere Erhebungen 61 aufweisen, welche sich jeweils radial zur Längsachse LA2 des Antireflexkörpers 60 nach aussen erstrecken. Die vorstehend genannten Erhebungen 61 können derart geformt sein, dass der erste Abschnitt 60.1 des Antireflexkörpers 60 bei einer Montage des Antireflexkörpers 60 den Tragkörper 50 über die jeweiligen Erhebungen 61 mit der Seitenfläche SF1 des Durchgangskanals DK1 des Tragkörpers 50 in Kontakt gebracht wird und dabei gegenüber der Seitenfläche SF1 des Durchgangskanals DK1 derart verspannt werden kann, dass der Antireflexkörpers 60 über die jeweiligen Erhebungen 61 an der Seitenfläche SF1 des Durchgangskanals DK1 gehalten ist.

Wie aus Fig. 6A und 6B ersichtlich, ist der Antireflexkörpers 60 im vorliegenden Beispiel derart am Tragkörper 50 implementiert, dass sich der erste Abschnitt 60.1 des Antireflexkörpers 60 durch einen ersten Teilbereich TB1 des Durchgangskanals DK1 des Tragkörpers 50 entlang der Längsachse LA1 des Durchgangskanals DK1 des Tragkörpers 50 zumindest über einen Teil der Länge eines Längsabschnitts des Durchgangskanals DK1 erstreckt, welcher an einem (der Abtastvorrichtung 30 nahen) ersten Ende von der ersten Auflagefläche AF1 für die Abtastvorrichtung 30 begrenzt ist und an einem (von der Abtastvorrichtung 30 entfernten) zweiten Ende von der zweiten Oberfläche 50.2 des Tragkörpers 50 begrenzt ist.

Wie ein Vergleich zwischen den Darstellungen in Fig. 3 und 6A andeutet, hat die Implementierung des Antireflexkörpers 60 am Tragkörper 50 keinen Einfluss auf eine Beleuchtung der Massverkörperung 20 mittels der Lichtquelle 35 der Abtastvorrichtung 30.

In der Darstellung gemäss Fig. 6A ist angenommen, dass die Lichtquelle 35 analog zur Darstellung gemäss Fig. 3 derart ausgebildet ist, dass das von der Lichtquelle 35 ausgestrahlte Licht entlang der Längsachse LA1 des Durchgangskanals DK1 derart propagiert, dass das zur Massverkörperung 20 propagierende Licht mit Bezug auf die Längsachse LA1 des Durchgangskanals DK1 divergiert. Zur Veranschaulichung dieses Sachverhalts ist das von der Lichtquelle 35 ausgestrahlte und auf die Massverkörperung 20 einfallende Licht in der Fig. 6A durch ein Bündel von vier Lichtstrahlen repräsentiert, welche mit "LE1", "LE2", "LE3" bzw. "LE4" bezeichnet sind und sich dadurch unterscheiden, dass die Lichtstrahlen LE1, LE2, LE3 und LE4, ausgehend von der Lichtquelle 35, mit unterschiedlichen Winkeln mit Bezug auf die Längsachse LA1 des Durchgangskanals DK1 geneigt sind und dementsprechend mit unterschiedlichen Winkeln mit Bezug auf die Längsachse LA1 des Durchgangskanals DK1 auf den Oberflächenbereich Oxy des ersten Linearführungskörpers 2 treffen, auf welchem die Massverkörperung 20 ausgebildet ist. In der Darstellung gemäss Fig. 6A ist (analog zur Darstellung gemäss Fig. 3) angenommen, dass die Lichtstrahlen LE1 und LE2 auf die Markierungsbereiche M und/oder Spiegelbereiche S der ersten Spur SP1 der Massverkörperung 20 treffen, während die Lichtstrahlen LE3 und LE4 auf die Markierungsbereiche M und/oder Spiegelbereiche S der zweiten Spur SP2 der Massverkörperung 20 treffen.

Wie in Fig. 6A angedeutet, können die Lichtstrahlen LE1, LE2, LE3 und LE4 durch den Durchgangskanal DK2 des Antireflexkörpers 60 und demnach unbeeinflusst vom Antireflexkörper 60 zur Massverkörperung 20 propagieren und somit mindestens einen Bereich der Massverkörperung 20 beleuchten.

Analog zur Darstellung gemäss Fig. 3 wird im Falle der Darstellung in Fig. 6A das auf unterschiedliche Bereiche der Massverkörperung 20 eintreffende Licht in der Regel in unterschiedliche Richtungen mit Bezug auf die Längsachse LA1 des Durchgangskanals DK1 reflektiert und/oder gestreut.

Zur Veranschaulichung dieses Sachverhalts ist in der Darstellung gemäss Fig. 6A (analog zur Darstellung gemäss Fig. 3) angenommen, dass das durch den Lichtstrahl LE1 repräsentierte Licht an der Massverkörperung 20 derart reflektiert und/oder gestreut wird, dass das reflektierte bzw. gestreute Licht durch einen Lichtstrahl repräsentiert ist, welcher mit "LR1" bezeichnet ist. Analog hierzu ist angenommen, dass das durch die Lichtstrahlen LE2, LE3 bzw. LE4 repräsentierte Licht an der Massverkörperung 20 derart reflektiert und/oder gestreut wird, dass das reflektierte bzw. gestreute Licht durch Lichtstrahlen repräsentiert ist, welche mit "LR2", "LR3" bzw. "LR4" bezeichnet sind. Wie in Fig. 6 angedeutet, propagiert das durch die Lichtstrahlen LR1, LR2, LR3 bzw. LR4 repräsentierte Licht - ausgehend vom Oberflächenbereich Oxy des ersten Linearführungskörpers 2 - jeweils mit unterschiedlichen Winkeln relativ zur Längsachse LA1 des Durchgangskanals DK1.

Wie in Fig. 6A angedeutet, kann das von der Lichtquelle 35 ausgestrahlte und gemäss dem Lichtstrahl LE1 auf die erste Spur SP1 der Massverkörperung 20 auftreffende Licht an der ersten Spur SP1 der Massverkörperung 20 derart reflektiert und/oder gestreut werden, dass das entsprechend reflektierte und/oder gestreute Licht gemäss dem in Fig. 6A dargestellten Lichtstrahl LR1 durch den Durchgangskanal DK2 des Antireflexkörpers 60 propagieren und - ausgehend von der ersten Spur SP1 der Massverkörperung 20 - die erste Anordnung 40.1 von Fotosensoren auf einem direkten Weg (ohne eine Reflexion an der Seitenwand SF1 des Durchgangskanals DK1 des Tragkörpers 50 und unbeeinflusst vom Antireflexkörper 60) erreichen kann. Das gemäss dem Lichtstrahl LR1 propagierende Licht ist deshalb geeignet, mittels der ersten Anordnung 40.1 von Fotosensoren detektiert zu werden.

Das von der Lichtquelle 35 ausgestrahlte und gemäss dem Lichtstrahl LE2 auf die erste Spur SP1 der Massverkörperung 20 auftreffende Licht wird hingegen an der ersten Spur SP1 der Massverkörperung 20 derart reflektiert und/oder gestreut, dass das entsprechend reflektierte und/oder gestreute Licht gemäss dem in Fig. 6A dargestellten Lichtstrahl LR2 zunächst durch einen Bereich des Durchgangskanals DK2 des Antireflexkörpers 60 propagiert und dabei auf einen Bereich des ersten Abschnitts 60.1 des Antireflexkörpers 60 trifft.

Da der erste Abschnitt 60.1 des Antireflexkörpers 60 gemäss der Erfindung aus einem Material besteht, welches geeignet ist, mittels der Lichtquelle 35 erzeugbares Licht zu absorbieren, und ausserdem gewährleistet, dass der erste Abschnitt 60.1 für das an dem mindestens einen Bereich der Massverkörperung 20 reflektierte und/oder gestreute Licht ein geringeres Reflexionsvermögen als die Seitenwand SF1 des Durchgangskanals DK1 aufweist, kann durch eine entsprechende Ausbildung des Antireflexkörpers 60 erreicht werden, dass zumindest ein relativ grosser Teil des an der ersten Spur SP1 der Massverkörperung 20 reflektierten und/oder gestreuten Lichts, welches entsprechend dem in Fig. 6A dargestellten Lichtstrahl LR2 auf den ersten Abschnitts 60.1 des Antireflexkörpers 60 trifft, im ersten Abschnitt 60.1 des Antireflexkörpers 60 absorbiert wird und folglich daran gehindert ist, an der Seitenwand SF1 des Durchgangskanals DK1 des Tragkörpers 50 reflektiert zu werden, und folglich auch daran gehindert ist, nach einer Reflexion an der Seitenwand SF1 des Durchgangskanals DK1 des Tragkörpers 50 zu der ersten Anordnung 40.1 von Fotosensoren zu gelangen und mittels der ersten Anordnung 40.1 von Fotosensoren detektierbar zu sein.

Wie in Fig. 6A angedeutet, kann das von der Lichtquelle 35 ausgestrahlte und gemäss dem Lichtstrahl LE3 auf die zweite Spur SP2 der Massverkörperung 20 auftreffende Licht an der zweiten Spur SP2 der Massverkörperung 20 derart reflektiert und/oder gestreut werden, dass das entsprechend reflektierte und/oder gestreute Licht gemäss dem in Fig. 6A dargestellten Lichtstrahl LR3 durch den Durchgangskanal DK2 des Antireflexkörpers 60 propagieren und - ausgehend von der zweiten Spur SP2 der Massverkörperung 20 - die zweite Anordnung 40.2 von Fotosensoren auf einem direkten Weg (ohne eine Reflexion an der Seitenwand SF1 des Durchgangskanals DK1 des Tragkörpers 50 und unbeeinflusst vom Antireflexkörper 60) erreichen kann. Das gemäss dem Lichtstrahl LR3 propagierende Licht ist deshalb geeignet, mittels der zweiten Anordnung 40.2 von Fotosensoren detektiert zu werden.

Das von der Lichtquelle 35 ausgestrahlte und gemäss dem Lichtstrahl LE4 auf die zweite Spur SP2 der Massverkörperung 20 auftreffende Licht wird hingegen an der zweiten Spur SP2 der Massverkörperung 20 derart reflektiert und/oder gestreut, dass das entsprechend reflektierte und/oder gestreute Licht gemäss dem in Fig. 6A dargestellten Lichtstrahl LR4 zunächst durch einen Bereich des Durchgangskanals DK2 des Antireflexkörpers 60 propagiert und dabei auf einen Bereich des ersten Abschnitts 60.1 des Antireflexkörpers 60 trifft.

Dementsprechend kann durch eine entsprechende Ausbildung des Antireflexkörpers 60 erreicht werden, dass zumindest ein relativ grosser Teil des an der ersten Spur SP1 der Massverkörperung 20 reflektierten und/oder gestreuten Lichts, welches entsprechend dem in Fig. 6A dargestellten Lichtstrahl LR4 auf den ersten Abschnitts 60.1 des Antireflexkörpers 60 trifft, im ersten Abschnitt 60.1 des Antireflexkörpers 60 absorbiert wird und folglich daran gehindert ist, an der Seitenwand SF1 des Durchgangskanals DK1 des Tragkörpers 50 reflektiert zu werden, und folglich auch daran gehindert ist, nach einer Reflexion an der Seitenwand SF1 des Durchgangskanals DK1 des Tragkörpers 50 zu der zweiten Anordnung 40.2 von Fotosensoren zu gelangen und mittels der zweiten Anordnung 40.2 von Fotosensoren detektierbar zu sein.

Ergänzend zu den vorstehend genannten Anmerkungen zu der Wirkung des Antireflexkörpers 60 auf das den Lichtstrahlen LR2 und LR4 entsprechende Licht sei darauf hingewiesen, dass eventuell ein relativ kleiner Teil des an der ersten Spur SP1 der Massverkörperung 20 reflektierten und/oder gestreuten Lichts, welches entsprechend dem in Fig. 6A dargestellten Lichtstrahl LR2 auf einen Bereich des ersten Abschnitts 60.1 des Antireflexkörpers 60 trifft, an der Oberfläche des ersten Abschnitts 60.1 des Antireflexkörpers 60 derart reflektiert und/oder gestreut werden kann, dass ein Teil dieses an der Oberfläche des ersten Abschnitts 60.1 des Antireflexkörpers 60 reflektierten und/oder gestreuten Lichts zu der ersten Anordnung 40.1 von Fotosensoren gelangen könnte und eventuell mittels der ersten Anordnung 40.1 von Fotosensoren detektierbar sein könnte. Analog kann eventuell ein relativ kleiner Teil des an der zweiten Spur SP2 der Massverkörperung 20 reflektierten und/oder gestreuten Lichts, welches entsprechend dem in Fig. 6A dargestellten Lichtstrahl LR4 auf einen Bereich des ersten Abschnitts 60.1 des Antireflexkörpers 60 trifft, an der Oberfläche des ersten Abschnitts 60.1 des Antireflexkörpers 60 derart reflektiert und/oder gestreut werden, dass ein Teil dieses an der Oberfläche des ersten Abschnitts 60.1 des Antireflexkörpers 60 reflektierten und/oder gestreuten Lichts zu der zweiten Anordnung 40.2 von Fotosensoren gelangen könnte und eventuell mittels der zweiten Anordnung 40.2 von Fotosensoren detektierbar sein könnte. Die Intensität des Lichts, welches an der Oberfläche des ersten Abschnitts 60.1 des Antireflexkörpers 60 reflektiert und/oder gestreut und auf diese Weise zu der ersten Anordnung 40.1 von Fotosensoren oder zu der zweiten Anordnung 40.2 von Fotosensoren gelangen könnte, kann durch eine geeignete Ausbildung der Oberfläche des ersten Abschnitts 60.1 des Antireflexkörpers 60 substantiell reduziert und minimiert werden. Zu diesem Zweck kann die Oberfläche des ersten Abschnitts 60.1 des Antireflexkörpers 60 beispielsweise in Bereichen, auf welche das an der Massverkörperung 20 reflektierte und/oder gestreute Licht treffen kann, als eine matte Oberfläche mit einer vorgegebenen Rauheit (beispielsweise mit einem Mittenrauwert Ra im Bereich 0.8 µm < Ra < 4.5 µm) ausgebildet werden.

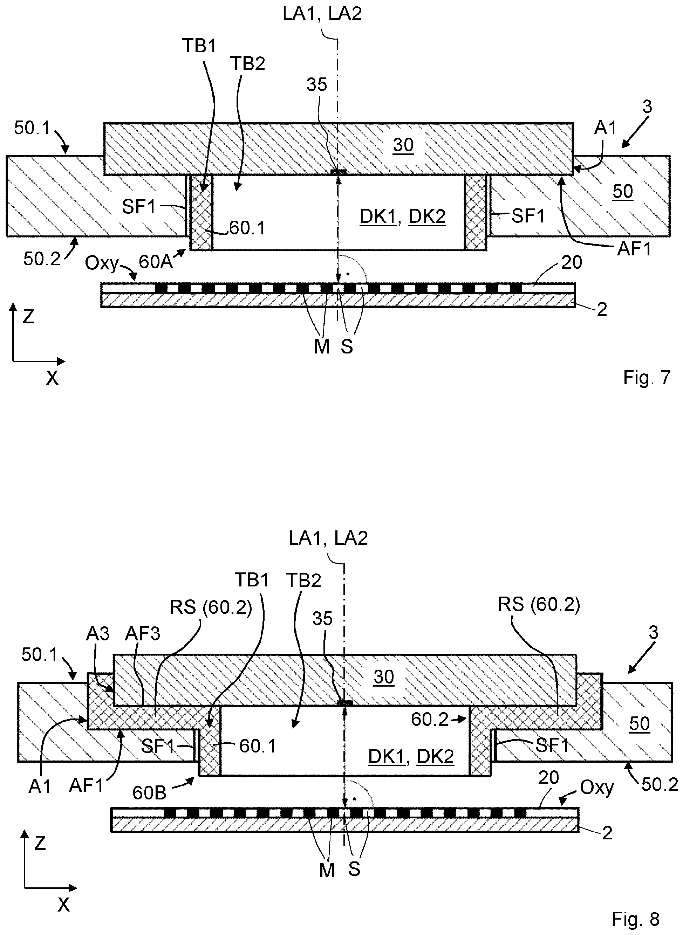

Die Fig. 7 zeigt (als eine zweite Ausführungsform eines erfindungsgemässen Antireflexkörpers) einen Antireflexkörper 60A und dessen Implementierung in der Linearführungsvorrichtung 1 bzw. am Tragkörper 50.

Der Antireflexkörper 60A ähnelt insofern dem in den Fig. 4A, 4B, 5A, 5B, 6A und 6B dargestellten Antireflexkörper 60, als der Antireflexkörper 60A einen ersten Abschnitt 60.1 aufweist, welcher hinsichtlich seiner Funktion, seiner physischen Struktur und seiner materiellen Beschaffenheit im Wesentlichen dem ersten Abschnitt 60.1 des Antireflexkörpers 60 entspricht. Dementsprechend ist der Antireflexkörper 60A derart geformt, dass der Antireflexkörper 60A im ersten Abschnitt 60.1 einen Durchgangskanal DK2 aufweist, welcher sich entlang einer Längsachse LA2 des Antireflexkörpers 60A erstreckt und radial zur Längsachse LA2 durch einen sich ringförmig um die Längsachse LA2 erstreckenden Bereich des Antireflexkörpers 60A begrenzt ist.

Der Antireflexkörper 60A unterscheidet sich vom Antireflexkörper 60 insbesondere dadurch, dass der Antireflexkörper 60A an der Abtastvorrichtung 30 befestigt ist. Die Abtastvorrichtung 30 und der Antireflexkörper 60A bilden in diesem Fall eine Einheit, welche als Ganzes bewegt und am Tragkörper 50 implementiert werden kann. Wie aus Fig. 7 ersichtlich, sind im vorliegenden Beispiel die Abtastvorrichtung 30 derart am Tragkörper 50 implementiert, dass die Abtastvorrichtung 30 mit der ersten Auflagefläche AF1 des Tragkörpers 50 in Kontakt gebracht ist. Der Antireflexkörper 60A ist derart an der Abtastvorrichtung 30 befestigt, dass, wenn die Abtastvorrichtung 30 an der ersten Auflagefläche AF1 des Tragkörpers 50 implementiert ist, der erste Abschnitt 60.1 des Antireflexkörpers 60A durch einen ersten Teilbereich TB1 des Durchgangskanals DK1 des Tragkörpers 50 entlang der Seitenfläche SF1 des Durchgangskanals DK1 des Tragkörpers 50 erstreckt (analog zur Anordnung des ersten Abschnitts 60.1 des Antireflexkörpers 60 gemäss Fig. 6A und 6B). Der erste Abschnitt 60.1 des Antireflexkörpers 60A kann dabei in einem Abstand zur Seitenfläche SF1 des Durchgangskanals DK1 des Tragkörpers 50 angeordnet sein.

Die Fig. 8 zeigt (als eine dritte Ausführungsform eines erfindungsgemässen Antireflexkörpers) einen Antireflexkörper 60B und dessen Implementierung in der Linearführungsvorrichtung 1 bzw. am Tragkörper 50.

Der Antireflexkörper 60B ähnelt insofern dem in den Fig. 4A, 4B, 5A, 5B, 6A und 6B dargestellten Antireflexkörper 60, als der Antireflexkörper 60B einen ersten Abschnitt 60.1 und einen oder mehrere zweite Abschnitte 60.2 aufweist, wobei der erste Abschnitt 60.1 des Antireflexkörpers 60B hinsichtlich seiner Funktion, seiner physischen Struktur und seiner materiellen Beschaffenheit im Wesentlichen dem ersten Abschnitt 60.1 des Antireflexkörpers 60 entspricht, und wobei ein zweiter Abschnitt 60.2 des Antireflexkörpers 60B funktionell im Wesentlichen einem zweiten Abschnitt 60.2 des Antireflexkörpers 60 entspricht.

Dementsprechend ist der Antireflexkörper 60B derart geformt, dass der Antireflexkörper 60B im ersten Abschnitt 60.1 einen Durchgangskanal DK2 aufweist, welcher sich entlang einer Längsachse LA2 des Antireflexkörpers 60B erstreckt und radial zur Längsachse LA2 durch einen sich ringförmig um die Längsachse LA2 erstreckenden Bereich des Antireflexkörpers 60B begrenzt ist. Entsprechend weist der Antireflexkörper 60B im vorliegenden Beispiel zwei sich mit Bezug auf die Längsachse LA2 des Antireflexkörpers 60B gegenüberliegende zweite Abschnitte 60.2 auf, welche jeweils als eine sich radial zur Längsachse LA2 des Durchgangskanals DK2 erstreckende, mit dem ersten Abschnitt 60.1 des Antireflexkörpers 60B verbundene Schulter RS ausgebildet sind.

Der Antireflexkörper 60B unterscheidet sich vom Antireflexkörper 60 insbesondere dadurch, dass die Abtastvorrichtung 30 an dem Antireflexkörper 60B befestigt ist. Die Abtastvorrichtung 30 und der Antireflexkörper 60A bilden in diesem Fall eine Einheit, welche als Ganzes bewegt und am Tragkörper 50 implementiert werden kann. Wie aus Fig. 8 ersichtlich, ist an den zweiten Abschnitten 60.2 des Antireflexkörpers 60B in einem von der ersten Auflagefläche AF1 des Tragkörpers 50 entfernten Bereich des zweiten Abschnitts 60.2 des Antireflexkörpers 60B eine sich radial zur Längsachse LA1 des Durchgangskanals DK1 des Tragkörpers 50 erstreckende dritte Auflagefläche AF3 für die Abtastvorrichtung 30 ausgebildet.

Die Abtastvorrichtung 30 ist derart an dem Antireflexkörper 60B platziert, dass die Abtastvorrichtung 30 in Kontakt mit der dritten Auflagefläche AF3 ist und mittels der dritten Auflagefläche AF3 in einer vorgegebenen Position mit Bezug auf den Antireflexkörper 60B gehalten ist. Im vorliegenden Beispiel weist der Antireflexkörper 60B im Bereich der zweiten Abschnitte 60.2 des Antireflexkörpers 60B eine Ausnehmung A3 auf, welche derart ausgebildet ist, dass sich die Ausnehmung A3 longitudinal zur Längsachse LA2 des Durchgangskanals DK2 des Antireflexkörpers 60B erstreckt und durch die dritte Auflagefläche AF3 begrenzt ist. Die Abtastvorrichtung 30 kann deshalb derart am Antireflexkörper 60B implementiert sein, dass die Abtastvorrichtung 30 in die Ausnehmung A3 aufgenommen ist, wenn sie in Kontakt mit der dritten Auflagefläche AF3 gebracht ist.

Wie aus Fig. 8 ersichtlich, ist im vorliegenden Beispiel der Antireflexkörpers 60B derart am Tragkörper 50 implementiert, dass der zweite Abschnitt 60.2 des Antireflexkörpers 60B mit der ersten Auflagefläche AF1 des Tragkörpers 50 in Kontakt gebracht ist und dabei sich der erste Abschnitt 60.1 des Antireflexkörpers 60B durch einen ersten Teilbereich TB1 des Durchgangskanals DK1 des Tragkörpers 50 entlang der Seitenfläche SF1 des Durchgangskanals DK1 des Tragkörpers 50 erstreckt (analog zur Anordnung des ersten Abschnitts 60.1 des Antireflexkörpers 60 gemäss Fig. 6A und 6B). Der erste Abschnitt 60.1 des Antireflexkörpers 60B kann dabei in einem Abstand zur Seitenfläche SF1 des Durchgangskanals DK1 des Tragkörpers 50 angeordnet sein.

Im Falle der Antireflexkörper 60, 60A und 60B bildet der erste Abschnitt 60.1 jeweils eine sich ringförmig um die Längsachse LA2 erstreckende Struktur, welche einen sich entlang der Längsachse LA2 erstreckenden Durchgangskanal DK2 mit Bezug auf die Längsachse LA2 radial aussen begrenzt. Im Rahmen der Erfindung kann der erste Abschnitt 60.1 auch eine andere Form aufweisen. Beispielsweise ist es nicht notwendig, dass sich der erste Abschnitt 60.1 längs einer geschlossenen Linie ringförmig um die Längsachse LA2 erstreckt. Abhängig von der räumlichen Lage der Lichtquelle 35 und/oder der Fotosensoren des Lichtsensors 40 mit Bezug auf den Tragkörper 50 kann es ausreichend sein, dass sich der erste Abschnitt 60.1 des Antireflexkörpers im Durchgangskanal DK1 des Tragkörpers 50 lediglich entlang eines Teils des Umfangs der Seitenfläche SF1 des Durchgangskanals DK1 und/oder entlang eines Teils der Länge des Durchgangskanals DK1 entlang der Längsachse LA1 des Durchgangskanals DK1 erstreckt.

## Patentansprüche

1. Linearführungsvorrichtung (1), umfassend:
einen ersten Linearführungskörper (2) und einen zweiten Linearführungskörper (3), welcher zweite Linearführungskörper (3) relativ zu dem ersten Linearführungskörper (2) linear in einer ersten Richtung (X) bewegbar ist; und
ein optisches Linearmesssystem (10) zum Erfassen einer Position des zweiten Linearführungskörpers (3) mit Bezug auf den ersten Linearführungskörper (2);
wobei das optische Linearmesssystem (10) umfasst:
- eine Massverkörperung (20), welche ortsfest mit Bezug auf den ersten Linearführungskörper (2) angeordnet ist und eine Mehrzahl in einer Reihe hintereinander angeordneter Markierungen (M; M1-M14) aufweist; und
- eine Abtastvorrichtung (30) zum optischen Abtasten der Markierungen (M; M1-M14) der Massverkörperung (20), welche Abtastvorrichtung (30) ortsfest mit Bezug auf den zweiten Linearführungskörper (3) angeordnet ist;
wobei die Abtastvorrichtung (30) umfasst:
- eine Lichtquelle (35) zum Erzeugen von Licht (LE1, LE2) zum Beleuchten zumindest eines mindestens eine der Markierungen (M; M1-M14) umfassenden Bereichs der Massverkörperung (20), wobei die Massverkörperung ausgebildet ist, von der Lichtquelle erzeugtes, einfallendes Licht (LE1, LE2, LE3, LE4) zu reflektieren und/oder zu streuen; und
- einen Lichtsensor (40, 40.1, 40.2) zum Erfassen von an dem mindestens einen Bereich der Massverkörperung (20) reflektierten und/oder gestreuten Licht (LR1, LR2); und
- einen ortsfest mit Bezug auf den zweiten Linearführungskörper (3) angeordneten Tragkörper (50) für den Lichtsensor (40, 40.1, 40.2), welcher Tragkörper (50) einen Durchgangskanal (DK1) aufweist, welcher von einer sich entlang einer Längsachse (LA1) des Durchgangskanals (DK1) erstreckenden Seitenfläche (SF1) begrenzt ist und sich zwischen dem Lichtsensor (40, 40.1, 40.2) und der Massverkörperung (20) derart erstreckt, dass an dem mindestens einen Bereich der Massverkörperung (20) reflektiertes und/oder gestreutes Lichts (LR1, LR2, LR3, LR4) durch den Durchgangskanal (DK1) zum Lichtsensor (40, 40.1, 40.2) gelangen kann und mittels des Lichtsensors (40, 40.1, 40.2) detektierbar ist;
**dadurch gekennzeichnet, dass**
am Tragkörper (50) ein Antireflexkörper (60, 60A, 60B) angeordnet ist, wobei der Antireflexkörper (60, 60A, 60B) einen ersten Abschnitt (60.1) aufweist, welcher aus einem Material besteht, welches geeignet ist, mittels der Lichtquelle (35) erzeugbares Licht zu absorbieren, und ausserdem gewährleistet, dass der erste Abschnitt (60.1) für das an dem mindestens einen Bereich der Massverkörperung (20) reflektierte und/oder gestreute Licht ein geringeres Reflexionsvermögen als die Seitenwand (SF1) des Durchgangskanals (DK1) aufweist,
wobei der erste Abschnitt (60.1) des Antireflexkörpers (60, 60A, 60B) sich durch einen ersten Teilbereich (TB1) des Durchgangskanals (DK1) des Tragkörpers (50) entlang der Seitenfläche (SF1) des Durchgangskanals (DK1) des Tragkörpers (50) derart erstreckt, dass neben dem ersten Abschnitt (60.1) des Antireflexkörpers (60, 60A, 60B) ein zweiter Teilbereich (TB2) des Durchgangskanals (DK1) des Tragkörpers (50) vorhanden ist,
sodass zumindest ein Teil (LR1, LR3) des an dem mindestens einen Bereich reflektierten und/oder gestreuten Lichts (LR1, LR2, LR3, LR4) den zweiten Teilbereich (TB2) des Durchgangskanals (DK1) des Tragkörpers (50) direkt ohne eine Reflexion an der Seitenwand (SF1) des Durchgangskanals (DK1) des Tragkörpers (50) und unbeeinflusst vom Antireflexkörper (60, 60A, 60B) zum Lichtsensor (40, 40.1, 40.2) passieren kann und mittels des Lichtsensors (40, 40.1, 40.2) detektierbar ist,
wobei ein anderer Teil (LR2, LR4) des an dem mindestens einen Bereich der Massverkörperung (20) reflektierten und/oder gestreuten Lichts (LR1, LR2, LR3, LR4), welcher in Richtung der Seitenwand (SF1) des Durchgangskanals (DK1) des Tragkörpers (50) reflektiert und/oder gestreut ist, vom Antireflexkörper (60, 60A, 60B) absorbierbar ist und dadurch daran gehindert ist, an der Seitenwand (SF1) des Durchgangskanals (DK1) des Tragkörpers (50) reflektiert zu werden und/oder nach einer Reflexion an der Seitenwand (SF1) des Durchgangskanals (DK1) des Tragkörpers (50) zum Lichtsensor (40, 40.1, 40.2) zu gelangen und mittels des Lichtsensors (40, 40.1, 40.2) detektierbar zu sein.

2. Linearführungsvorrichtung (1) nach Anspruch 1, wobei der Tragkörper (50) ein integraler Bestandteil des zweiten Linearführungskörpers (3) ist.

3. Linearführungsvorrichtung (1) nach Anspruch 1 oder 2, wobei der Antireflexkörper (60, 60A, 60B) im ersten Abschnitt (60.1) des Antireflexkörpers (60, 60A, 60B) einen Durchgangskanal (DK2) aufweist, welcher sich entlang der Längsachse (LA1) des Durchgangskanals (DK1) des Tragkörpers (50) durch den zweiten Teilbereich (TB2) des Durchgangskanals (DK1) des Tragkörpers (50) erstreckt.

4. Linearführungsvorrichtung (1) nach einem der Ansprüche 1-3, wobei der Tragkörper (50) eine erste Oberfläche (50.1) und eine der ersten Oberfläche (50.1) gegenüberliegende zweite Oberfläche (50.2) aufweist, welche zweite Oberfläche (50.2) mit Bezug auf die Massverkörperung (20) einen geringeren Abstand aufweist als die erste Oberfläche (50.1), wobei an der ersten Oberfläche (50.1) eine sich radial zur Längsachse (LA1) des Durchgangskanals (DK1) des Tragkörpers (50) erstreckende erste Auflagefläche (AF1) ausgebildet ist, welche erste Auflagefläche (AF1) dazu dient, die Abtastvorrichtung (30) oder den Antireflexkörper (60B) zu stützen.

5. Linearführungsvorrichtung (1) nach Anspruch 4, wobei der Tragkörper (50) an der ersten Oberfläche (50.1) eine erste Ausnehmung (A1) aufweist, welche sich longitudinal zur Längsachse (LA1) des Durchgangskanals (DK1) des Tragkörpers (50) erstreckt,
wobei die erste Auflagefläche (AF1) in der ersten Ausnehmung (A1) ausgebildet ist, sodass die erste Ausnehmung (A1) durch die erste Auflagefläche (AF1) begrenzt ist.

6. Linearführungsvorrichtung (1) nach Anspruch 4 oder 5, wobei der Tragkörper (50) an der ersten Oberfläche (50.1) eine zweite Ausnehmung (A2) aufweist, welche neben der ersten Auflagefläche (AF1) derart ausgebildet ist, dass sich die zweite Ausnehmung (A2) longitudinal zur Längsachse (LA1) des Durchgangskanals (DK1) des Tragkörpers (50) erstreckt und in einem Bereich der zweiten Ausnehmung (A2) durch eine zweite Auflagefläche (AF2) begrenzt ist, welche sich radial zur Längsachse (LA1) des Durchgangskanals (DK1) des Tragkörpers (50) erstreckt.

7. Linearführungsvorrichtung (1) nach Anspruch 6, wobei der Antireflexkörper (60) mindestens einen zweiten Abschnitt (60.2) aufweist, welcher als eine sich radial zur Längsachse (LA1) des Durchgangskanals (DK1) des Tragkörpers (50) erstreckende Schulter (RS) ausgebildet ist, und wobei der Antireflexkörper (60) derart am Tragkörper (50) platziert oder platzierbar ist, dass der erste Abschnitt (60.1) des Antireflexkörpers (60) im ersten Teilbereich (TB1) des Durchgangskanals (DK1) des Tragkörpers (50) angeordnet ist und der mindestens einen zweiten Abschnitt (60.2) des Antireflexkörpers (60) mit der zweiten Auflagefläche (AF2) des Tragkörpers (50) in Kontakt gebracht ist.

8. Linearführungsvorrichtung (1) nach einem der Ansprüche 4-7, wobei die Abtastvorrichtung (30) derart am Tragkörper (50) platziert oder platzierbar ist, dass die Abtastvorrichtung (30) mit der ersten Auflagefläche (AF1) des Tragkörpers (50) in Kontakt gebracht ist.

9. Linearführungsvorrichtung (1) nach Anspruch 4 oder 5, wobei der Antireflexkörper (60A) an der Abtastvorrichtung (30) befestigt ist und
wobei die Abtastvorrichtung (30) derart am Tragkörper (50) platziert oder platzierbar ist, dass die Abtastvorrichtung (30) mit der ersten Auflagefläche (AF1) des Tragkörpers (50) in Kontakt gebracht ist und der erste Abschnitt (60.1) des Antireflexkörpers (60A) im ersten Teilbereich (TB1) des Durchgangskanals (DK1) des Tragkörpers (50) angeordnet ist.

10. Linearführungsvorrichtung (1) nach Anspruch 4 oder 5, wobei der Antireflexkörper (60B) mindestens einen zweiten Abschnitt (60.2) aufweist, welcher als eine sich radial zur Längsachse (LA1) des Durchgangskanals (DK1) des Tragkörpers (50) erstreckende Schulter ausgebildet ist, und wobei der Antireflexkörpers (60B) derart am Tragkörper (50) platziert oder platzierbar ist, dass der zweite Abschnitt des Antireflexkörpers (60B) mit der ersten Auflagefläche (AF1) des Tragkörpers (50) in Kontakt gebracht ist und der erste Abschnitt (60.1) des Antireflexkörpers (60B) im ersten Teilbereich (TB1) des Durchgangskanals (DK1) des Tragkörpers (50) angeordnet ist.

11. Linearführungsvorrichtung (1) nach Anspruch 10, wobei am zweiten Abschnitt (60.2) des Antireflexkörpers (60B) in einem von der ersten Auflagefläche (AF1) des Tragkörpers (50) entfernten Bereich des zweiten Abschnitts (60.2) des Antireflexkörpers (60B) eine sich radial zur Längsachse (LA1) des Durchgangskanals (DK1) des Tragkörpers (50) erstreckende dritte Auflagefläche (AF3) für die Abtastvorrichtung (30) ausgebildet ist, und
wobei die Abtastvorrichtung (30) derart an dem Antireflexkörper (60B) platziert oder platzierbar ist, dass die Abtastvorrichtung (30) in Kontakt mit der dritten Auflagefläche (AF3) ist und mittels der dritten Auflagefläche (AF3) in einer vorgegebenen Position mit Bezug auf den Antireflexkörper (60B) gehalten oder haltbar ist.

12. Linearführungsvorrichtung (1) nach einem der Ansprüche 1-11, wobei der Antireflexkörper (60, 60A, 60B) aus einem Kunststoffmaterial gefertigt ist.

13. Linearführungsvorrichtung (1) nach Anspruch 12, wobei im Kunststoffmaterial ein Farbstoff verteilt ist, welcher Farbstoff geeignet ist, mittels der Lichtquelle (35) erzeugbares Licht zu absorbieren.

14. Linearführungsvorrichtung (1) nach einem der Ansprüche 1 - 13, wobei der Antireflexkörper (60, 60A, 60B) eine Oberfläche aufweist, welche zumindest in einem Bereich, welcher für das an dem mindestens einen Bereich der Massverkörperung (20) reflektierte und/oder gestreute Licht (LR2) zugänglich ist, eine Rauheit mit einem Mittenrauwert Ra im Bereich 0.8 µm < Ra < 4.5 µm aufweist.

15. Linearführungsvorrichtung (1) nach einem der Ansprüche 1 - 14, wobei die Form des ersten Abschnitts (60.1) des Antireflexkörpers (60, 60A, 60B) an die Form des Durchgangskanals (DK1) des Tragkörpers (50) angepasst ist, sodass der erste Abschnitt (60.1) des Antireflexkörpers (60, 60A, 60B) in den Durchgangskanal (DK1) des Tragkörpers (50) einführbar und zwischen verschiedenen Bereichen der Seitenfläche (SF1) des Durchgangskanals (DK1) des Tragkörpers (50) einklemmbar ist, um den Antireflexkörper (60, 60A, 60B) in einer vorgegebenen Position mit Bezug auf den Tragkörper (50) halten zu können.

16. Linearführungsvorrichtung (1) nach einem der Ansprüche 1 - 15, wobei der erste Linearführungskörper (2) als eine sich linear in der ersten Richtung (X) erstreckende Führungsschiene und der zweite Linearführungskörper (3) als ein an der Führungsschiene geführter Führungswagen ausgebildet ist.

17. Linearführungsvorrichtung (1) nach einem der Ansprüche 1 - 15, wobei der zweite Linearführungskörper als eine sich linear in der ersten Richtung (X) erstreckende Führungsschiene und der erste Linearführungskörper als ein an der Führungsschiene geführter Führungswagen ausgebildet ist.
